# EUROPEAN PATENT SPECIFICATION

(11) **EP 2 586 665 B1**
(45) Date of publication and mention of the grant of the patent: **12.08.2015**
(21) Application number: 11798008.6
(22) Date of filing: 14.06.2011
(51) Int. Cl.: B60R 21/36, B60R 21/2165

(54) **AIRBAG DEVICE**
AIRBAGVORRICHTUNG
DISPOSITIF DE COUSSIN DE SÉCURITÉ GONFLABLE

(30) Priority: 23.06.2010 JP 2010142783; 23.06.2010 JP 2010142708
(43) Date of publication of application: 01.05.2013
(73) Proprietor: Honda Motor Co., Ltd., Minato-ku Tokyo 107-8556 (JP); Takata Corporation, Tokyo 107-8508 (JP)
(72) Inventor: OKAMOTO, Yutaka, Wako-shi Saitama 351-0193 (JP); KIKUCHI, Yuji, Wako-shi Saitama 351-0193 (JP); HONMA, Koji, Wako-shi Saitama 351-0193 (JP); NAKAMURA, Atsushi, Tokyo 107-8508 (JP); KOBAYASHI, Yoshihiro, Tokyo 107-8508 (JP)
(74) Representative: Weickmann & Weickmann
(86) International application number: PCT/JP2011/063552
(87) International publication number: WO 2011/162122

(56) References cited:
- EP-A2- 2 050 632
- WO-A1-02/079009
- WO-A1-2007/085918
- JP-A- 2001 010 440
- JP-A- 2002 283 939
- JP-A- 2005 096 686
- JP-A- 2009 096 278

## Description

### TECHNICAL FIELD

The present invention relates to an airbag device wherein the airbag is covered by a garnish with the airbag (bag unit) folded along a vertical direction of a front pillar between the front pillar and a front windshield glass.

### BACKGROUND ART

A garnish of such description is typically formed either of a resin alone, or a resin integrally formed on the outer surface of a core bar. Mounting a garnish onto a front pillar covers the airbag with the garnish.

According to the airbag device, the airbag deploys when a collision is involved between an obstacle and a vehicle. Having the airbag deploy causes the deployment force of the airbag to act on the garnish, the garnish to detach from the front pillar by the imparted deployment force, and the space between the front pillar and the front windshield glass to be opened. As a consequence of the space between the front pillar and the front windshield glass being opened, the airbag deploys along the front pillar from the opened space.

Due to the airbag deploying along the front pillar, the impact from the obstacle can be received by the airbag even when, e.g., the vehicle is involved in a secondary collision with an obstacle. Accordingly, the impact force that acts on the obstacle can be alleviated by the airbag (e.g., see JP-2009-234431 A).

However, in the airbag device disclosed in JP-2009-234431 A, it is possible that the garnish will detach from the front pillar when the garnish is opened by the deployment force of the airbag in the case that the garnish has a core bar. Furthermore, in the case of a garnish formed using only resin, it is possible that the garnish will crack and detach from the front pillar when the garnish is opened by the deployment force of the airbag.

WO 02/079009 A1 shows the closest prior art and discloses an airbag device comprising an airbag accommodated in a folded state between a front pillar and a front windshield glass; an inflator for feeding gas to the airbag to thereby deploy the airbag; and a garnish covering the airbag and being capable of opening by a deployment force of the airbag, the garnish including: a metal core bar having a pillar sidewall extending in a longitudinal direction of the vehicle body along the front pillar; and a decorative resin part formed on a surface of the core bar, and the pillar sidewall is mounted on the front pillar, wherein the core bar comprises a mounting bracket wit a stud bold between the front pillar and the front windshield glass.

### SUMMARY OF INVENTION

### Technical Problem

An object of the present invention is to provide an airbag device capable of holding a garnish on the front pillar when the airbag deploys.

### Solution to Problem

According to a first aspect of the present invention, there is provided an airbag device in accordance with claim 1.

The airbag device includes: an airbag accommodated in a folded state between a front pillar and a front windshield glass; an inflator for feeding gas to the airbag in order to deploy the airbag; and a garnish for covering the airbag, the garnish opening by the deployment force of the airbag, wherein the garnish has a metal core bar that can be mounted on the front pillar, the metal core bar extending from the front pillar to above the front windshield glass, and a window-glass-side wall made of resin, the window-glass-side wall extending from an end part of the core bar positioned above the front windshield glass to the surface of the front windshield glass; and the core bar has a pillar sidewall extending in the longitudinal direction of the vehicle body along the front pillar, and a lid part extending from the upper end part of the pillar sidewall toward the center of the vehicle body to above the front windshield glass to cover the airbag; and the pillar sidewall and the lid part are integrally joined together.

According to the invention, when the airbag is to be filled by gas from the inflator, the gas first fills the airbag in the vicinity of the inflator, and then in locations set apart from the inflator. Accordingly, the airbag deployment force is first generated in the vicinity of the inflator, and thereafter in locations set apart from the inflator. In view of this process, the distance between the slits is set so as to be greater in the vicinity of the inflator than in locations set apart from the inflator. Accordingly, when airbag deployment force is generated in the vicinity of the inflator, the generation of cracks from the slits in the vicinity of the inflator to the corner part is prevented, and the corner part in the vicinity of the inflator is prevented from rupturing.

According to a second aspect of the present invention, it is preferred that the airbag comprise: a stud member having a support shaft provided so as to protrude from the front pillar to the airbag side, and an enlarged-diameter part is formed on an end part of the support shaft; and a locking part formed in the pillar sidewall in order to mount the pillar sidewall on the stud member, the locking part having: a fitting hole into which the enlarged-diameter part can be fitted, and a locking groove into which the support shaft is fitted, the locking groove communicating with the fitting hole and the locking groove being less wide than the outside diameter of the enlarged-diameter part.

According to a further aspect, it is preferred that the lid part have the same cross-sectional shape from the front end part to the rear end part, the lid part being a member molded by roll forming.

According to a third aspect of the present invention, the core bar comprises a front mounting bracket provided to a front end part and a rear mounting bracket provided to the rear end part; the front mounting bracket be fastened by a front nut to a front stud bolt protruding from a location on the front end part of the vehicle body, between the front pillar and the front windshield glass; and the rear mounting bracket be fastened by a rear nut to a rear stud bolt protruding from a location on the rear end part of the vehicle body, between the front pillar and the front windshield glass.

According to a further aspect, it is preferred that the airbag device include a female clip provided to the front pillar and a male clip provided to the lid; and the male clip be fitted into the female clip, whereby the garnish is held to the front pillar.

### Advantageous Effects of Invention

In the first aspect of the present invention, a metal core bar is provided to the garnish, and the pillar sidewall of the core bar is extended along the front pillar. The pillar sidewall is mounted on the front pillar. The garnish can thus be held to the front pillar when the garnish is opened by the airbag during deployment.

Further, in the first aspect of the present invention, the lid part and the pillar sidewall are linked via the corner part, and the lid part is pivotably supported about the corner part. Accordingly, causing the deployment force of the airbag to act on the lid part when the airbag deploys makes it possible for the lid part to smoothly open upward about the corner part. Thus, the airbag can be advantageously opened along the front pillar so that the lid part does not block the deployment direction of the airbag.

Further, in the first aspect of the present invention, a slit is formed in the corner part to allow the strength of the corner part to be adjusted. Forming a slit in the corner part and adjusting the strength thus allows the lid part to smoothly open upward about the corner part when the deployment force of the airbag has acted on the lid part.

Further, in the first aspect of the present invention, the distance between slits is made greater in the vicinity of the inflator than in locations set apart from the inflator. Accordingly, the corner part in the vicinity of the inflator can be prevented from rupturing when the deployment force of the airbag is generated in the vicinity of the inflator. When the deployment force of the airbag acts on the lid part, the entire lid part can be smoothly opened upward about the corner part by the deployment force of the airbag.

In the second aspect of the present invention, the fitting hole of the locking part is fitted onto the enlarged-diameter part of the stud member, and the locking groove, which is in communication with the fitting hole, can be fitted onto the support shaft of the stud member. The width of the locking groove is formed to be less than the outside diameter of the enlarged-diameter part. Accordingly, the locking groove can be blocked by the enlarged-diameter part from dislodging from the support shaft while the locking groove is fitted onto the support shaft. The pillar sidewall can thus be mounted on the front pillar via the support shaft.

The work of mounting the pillar sidewall on the front pillar via the support shaft can thus be carried out in a simple manner using a simple operation in which the fitting hole is first fitted onto the enlarged-diameter part and the locking groove subsequently fitted onto the support shaft.

Further, a Window-glass-side wall extends from the end part of the lid part on center side of the vehicle body toward the front windshield glass, and is formed substantially in a U-shape by the window-glass-side wall, the lid part, and the pillar sidewall. Accordingly, the airbag can be prevented by the window-glass-side wall from diverting to the front window glass when the lid part opens upward under the deployment force of the airbag. Thus, the airbag can be advantageously deployed along the front pillar.

In the third aspect of the present invention, a front mounting bracket of the core bar is fastened to the vehicle body by a front stud bolt and a front nut, and the rear mounting bracket of the core bar is fastened to the vehicle body by a rear stud bolt and a rear nut. Thus, the core bar (i.e., the garnish) can be firmly mounted on the vehicle body side.

Further, a recess is formed on the outer wall surface of the pillar sidewall, and the mounting end part of the connector is held by a metal plate and the inner wall surface that corresponds to the recess. The connector is, e.g., a strap for supporting the airbag. The metal plate and the pillar sidewall are fastened together using a fastening member to mount the mounting end part of the connector on the inner wall surface of the pillar sidewall. Thus the mounting end part of the connector can be firmly mounted on the inner wall surface of the pillar sidewall.

In the first aspect of the present invention, a metal core bar is provided to the garnish, and the core bar can be mounted on the front pillar. Thus, the garnish can be held to the front pillar when the garnish is opened by the airbag during deployment.

Furthermore, a window-glass-side wall made of resin is provided to the metal core bar to thereby form a garnish. Forming a garnish using the core bar and the window-glass-side wall allows the window-glass-side wall to be made into a single member. Making the window-glass-side wall into a single member thus allows the height of the window-glass-side wall to be readily adjusted. Thus, the degree of freedom for determining the height (depth) of the garnish can be increased.

Furthermore, dividing the core bar into a pillar sidewall and a lid part allows the divided members (pillar sidewall and lid part) to be made smaller, and allows the shape of the divided members (pillar sidewall and lid part) to be simplified. Thus, manufacture of the core bar is facilitated, and the mold for molding the core bar can be made smaller. Therefore, installation costs and the cost of the core bar can be reduced.

In the second aspect of the present invention, the fitting hole of the locking part is fitted onto the enlarged-diameter part of the stud member, and the locking groove in communication with the fitting hole can be fitted onto the stud member. The width of the locking groove is formed to be less than the outside diameter of the enlarged-diameter part. Accordingly, the locking groove can be blocked by the enlarged-diameter part from dislodging from the support shaft while the locking groove is fitted onto the support shaft. Thus, the pillar sidewall can be mounted on the front pillar via the support shaft. Thus, the work of mounting the pillar sidewall on the front pillar via the support shaft can be carried out in a simple manner using a simple operation in which the fitting hole is first fitted onto the enlarged-diameter part and the locking groove subsequently fitted onto the support shaft.

In the first aspect of the present invention, a corner part is provided to the location on the lid part that is to be linked to the pillar sidewall, and the lid part is pivotably supported about the corner part. Accordingly, causing the deployment force of the airbag to act on the lid part when the airbag deploys makes it possible for the lid part to smoothly open upward about the corner part. Thus, the airbag can be advantageously opened along the front pillar so that the lid part does not block the deployment direction of the airbag.

In the first aspect of the present invention, a slit is formed in the corner part to allow the strength of the corner part to be adjusted. Forming a slit in the corner part and adjusting the strength thus allows the lid part to smoothly (freely) open upward about the corner part when the deployment force of the airbag has acted on the lid part.

In the first aspect of the present invention, the distance between slits is made greater in the vicinity of the inflator than in locations set apart from the inflator. Accordingly, the corner part in the vicinity of the inflator can be prevented from rupturing when the deployment force of the airbag is generated in the vicinity of the inflator. When the deployment force of the airbag acts on the lid part, the entire lid part can be smoothly opened upward about the corner part by the deployment force of the airbag.

The lid part can be formed so as to have the same cross-sectional shape from the front end part to the rear end part, and the lid part can be molded by roll forming. Forming the lid part by roll forming thus makes mass production of the lid part possible by full automation, and allows the cost of the lid part to be reduced.

In the third aspect of the present invention, a front mounting bracket of the core bar is fastened to the vehicle body by a front stud bolt and a front nut, and the rear mounting bracket of the core bar is fastened to the vehicle body by a rear stud bolt and a rear nut. Thus, the core bar (i.e., the garnish) can be firmly mounted on the vehicle body side.

Further, the male clip on the lid part is fitted into the female clip on the front pillar to thereby hold the garnish to the front pillar. Fitting the male clip into the female clip allows the garnish to be held with good precision in the mounting position on the front pillar, and the external appearance can be advantageously ensured. Additionally, fitting the male clip into the female clip and making it possible to hold the garnish with good precision allows the garnish to be positioned in a simple manner in the mounting position and allows the work of assembling the garnish to be facilitated.

### BRIEF DESCRIPTION OF DRAWINGS

FIG. 1 is a perspective view showing the structure of the front part of the vehicle body provided with the airbag device according to a first embodiment of the present invention;
FIG. 2 is an exploded perspective view showing the airbag device of FIG. 1;
FIG. 3 is a cross-sectional view taken along line 3-3 of FIG. 1;
FIG. 4 is an exploded perspective view showing a garnish of FIG. 2;
FIG. 5 is a perspective view showing a core bar of FIG. 4;
FIG. 6 is a perspective view showing a stud member and a locking part of the airbag device according to the first embodiment;
FIG. 7 is a perspective view showing a rear end part of the airbag of FIG. 2, mounted on a rear mounting bracket via a rear joining part;
FIG. 8 is a cross-sectional view taken along line 8-8 of FIG. 1;
FIG. 9 is a view showing a procedure for fitting an enlarged-diameter part of the stud member into the locking part of the airbag device according to the first embodiment;
FIG. 10 is a view showing a state wherein the enlarged-diameter part of the stud member is locked onto the locking part of the airbag device, while FIG. 10(b) is a cross-sectional view taken along line 10b-10b of FIG. 10(a);
FIG. 11 is a view showing an example of airbag deployment according to the first embodiment;
FIG. 12 is a cross-sectional view showing the airbag in a deployed state;
FIG. 13 is a perspective view showing the airbag in a deployed state;
FIG. 14 is a cross-sectional view showing an airbag device according to a second embodiment of the present invention;
FIG. 15 is a perspective showing a front structure of a vehicle body provided with an air bag according to a third embodiment of the present invention;
FIG. 16 is an exploded perspective view showing the airbag device of FIG. 15;
FIG. 17 is a cross-sectional view taken along line 17-17 of FIG. 15;
FIG. 18 is an exploded perspective view showing the garnish of FIG. 16;
FIG. 19 is a perspective view showing the core bar of FIG. 18;
FIG. 20 is a perspective view showing a stud member and a locking part of the airbag device according to the third embodiment;
FIG. 21 is a perspective view showing the rear end part of the airbag of FIG. 16 mounted on the rear mounting bracket via the rear joining part;
FIG. 22 is a cross-sectional view taken along line 22-22 of FIG. 15;
FIG. 23 is a view showing the procedure for fitting the enlarged-diameter part of the stud member into the locking part of the airbag device according to the third embodiment;
FIG. 24(a) shows the enlarged-diameter part of the stud member locked into the locking part of the airbag device, and FIG. 24(b) is cross-sectional view taken along line 24b-24b of FIG. 24(a);
FIG. 25 is a view showing an example of deployment of the airbag according to the third embodiment;
FIG. 26 is a cross-sectional view showing the airbag in a deployed state;
FIG. 27 is a perspective view showing the airbag in a deployed state;
FIG. 28 is a perspective view showing an airbag device according to a fourth embodiment of the present invention;
FIG. 29 is an exploded perspective view showing a garnish of FIG. 28;
FIG. 30 is a cross-sectional view taken along line 30-30 of FIG. 28;
FIG. 31 is a perspective view showing a core bar and female clip of FIG. 29;
FIG. 32 is a perspective view showing a lid and male clip of FIG. 29; and
FIG. 33 is a cross-sectional view taken along line 33-33 of FIG. 28.

### DESCRIPTION OF EMBODIMENTS

Certain preferred embodiments of the present invention will be described below with reference to the accompanying drawings.

### First embodiment

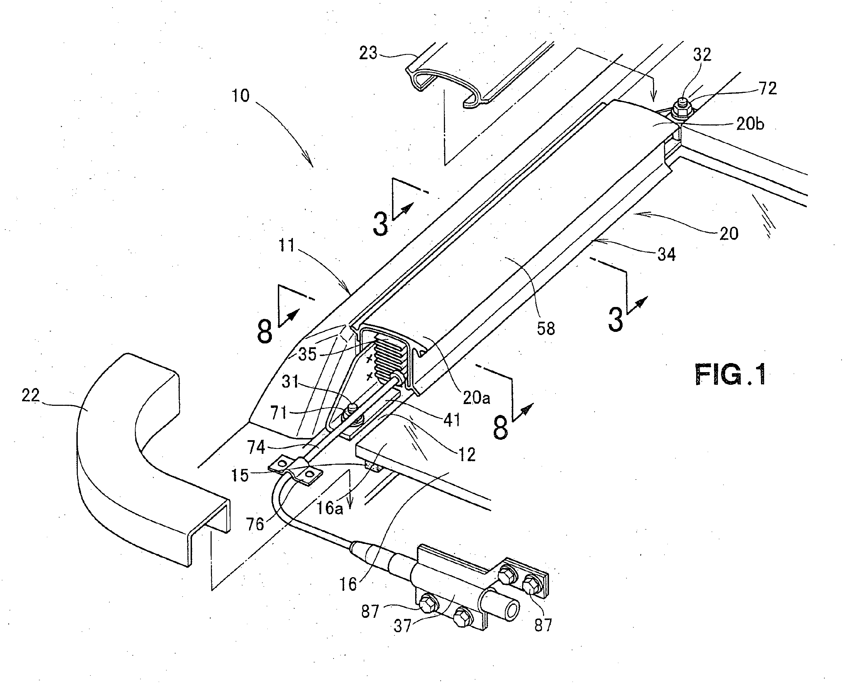

As shown in FIG. 1, the front structure 10 of the vehicle body includes a right front pillar 11 provided to the right side part of the vehicle body, a front windshield glass 16 in which a right end part 16a is disposed on a flange part (vehicle body) 12 of the right front pillar 11 via a seal 15, an airbag device 20 provided between the front windshield glass 16 and the right front pillar 11, a cowl cover 22 provided to a front end part 20a of the airbag device 20, and a side roof rail cover 23 provided to the rear end part 20b of the airbag device 20.

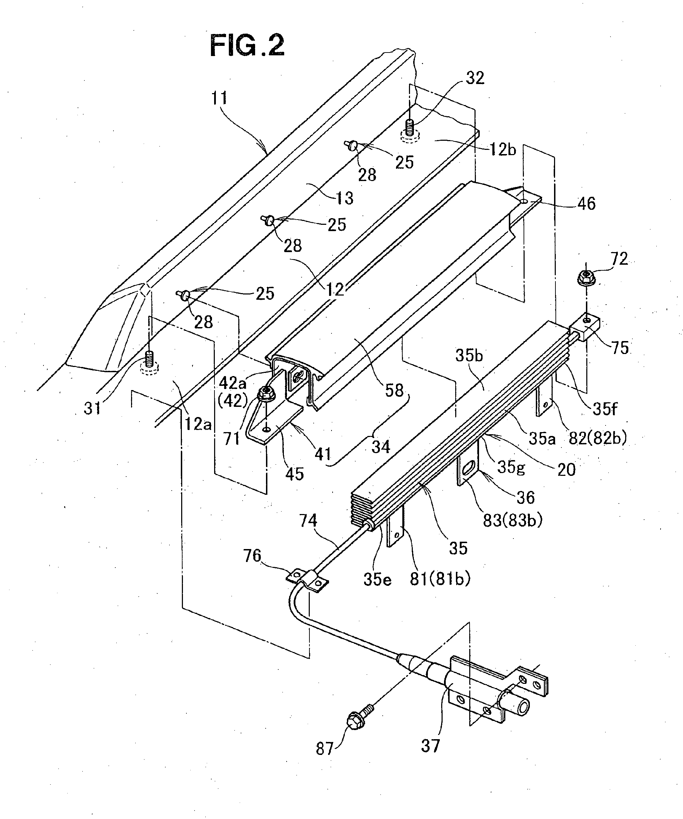

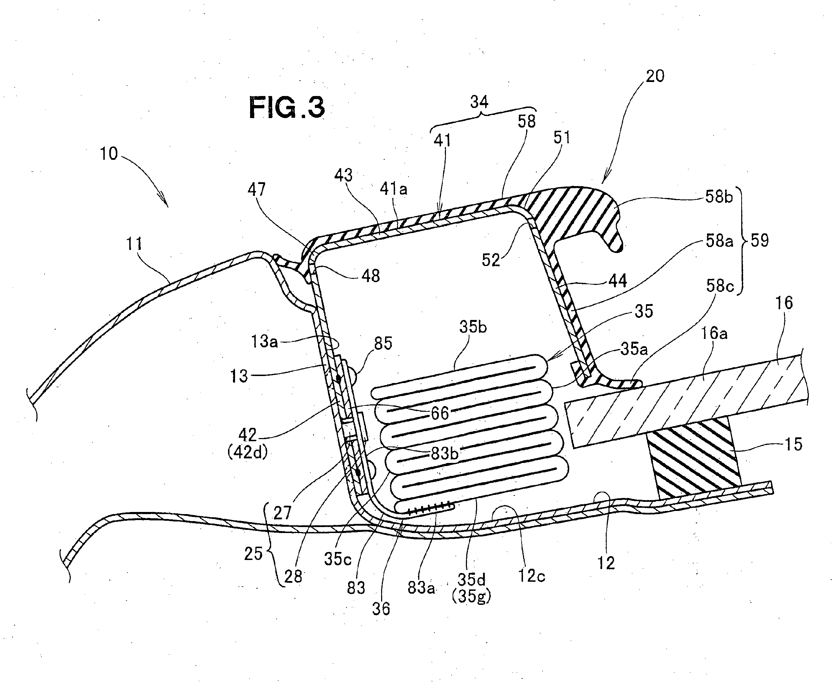

As shown in FIGS. 2 and 3, the right front pillar 11 has an inner wall 13 provided upright to the center side of the vehicle body, and a plurality of stud members 25 provided to the inner wall 13 at predetermined intervals in the longitudinal direction of the vehicle body.

The stud members 25 have a support shaft 27, the base end part of which is welded to an outer surface 13a of the inner wall 13, and an enlarged-diameter part 28 formed at the distal end part (end part) of the support shaft 27. Welding the base end part of the support shaft 27 to the outer surface 13a provides the support shaft 27 to the outer surface 13a in a protruding manner, and the support shaft 27 protrudes from the outer surface 13a to the airbag 35 side. The enlarged-diameter part 28 is formed at the distal end of the support shaft 27 that protrudes from the outer surface 13a.

A front stud bolt 31 protrudes upward from a location (hereinafter referred to as "front location") 12a on the front end part of the flange part 12, between the inner wall 13 of the right front pillar 11 and the front windshield glass 16. A rear stud bolt 32 protrudes upward from a location (hereinafter referred to as "rear location") 12b on the rear end part of the flange part 12, between the inner wall 13 of the right front pillar 11 and the front windshield glass 16.

The airbag device 20 includes a garnish 34 provided to the right front pillar 11, an airbag (bag body) 35 accommodated inside the garnish 34, connection means 36 for linking the airbag 35 to the right front pillar 11, and an inflator 37 in communication with the airbag 35.

The garnish 34 extends so as to form an upward slope in the rearward direction of the vehicle body along the right front pillar 11. The garnish 34 includes a metal core bar 41 mounted on the right front pillar 11, and a decorative resin part 58 formed on the surface 41a of the core bar 41.

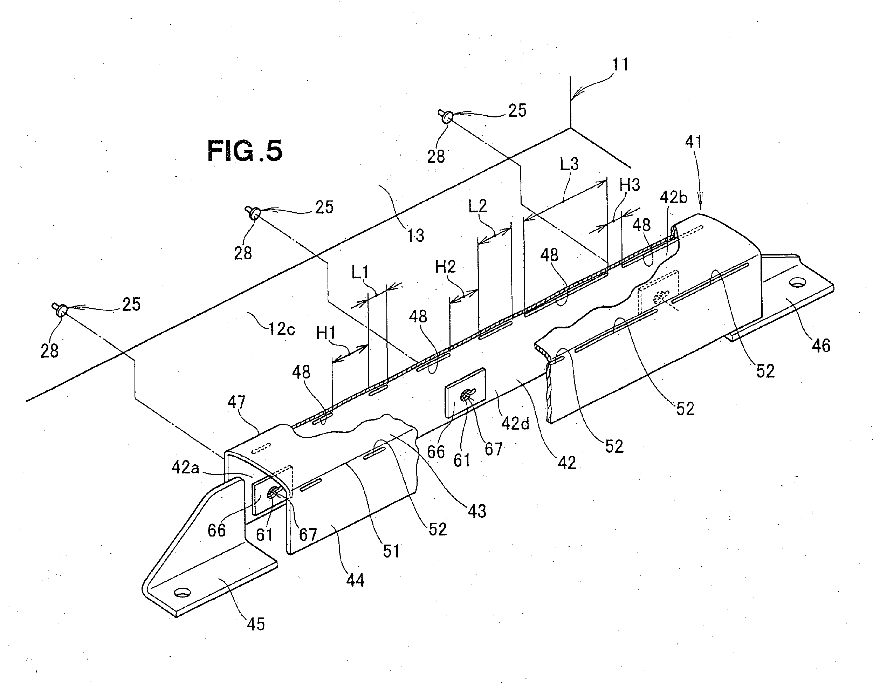

The core bar 41 has a pillar sidewall 42 along the right front pillar 11, a lid part 43 extended in the lateral direction from the upper end part of the pillar sidewall 42, a window-glass-side wall 44 extended downward from the end part of the lid part 43 on the center side of the vehicle body, a front mounting bracket 45 provided to the front end part 42a of the pillar sidewall 42, and a rear mounting bracket 46 provided to the rear end part 42b (see FIG. 5) of the pillar sidewall 42.

The core bar 41 is formed substantially in a U shape by the pillar sidewall 42, the lid part 43, and the window-glass-side wall 44. The window-glass-side wall 44 prevents the airbag 35 from diverting to the front windshield glass 16 side when the lid part 43 opens upward under the pressing force (i.e., the deployment force of the airbag 35) generated when the airbag 35 deploys. Thus, the airbag 35 can be suitably deployed along the right front pillar 11. As used herein, the deployment force of the airbag 35 is referred to as the pressing force that acts on the core bar 41 when the airbag 35 deploys.

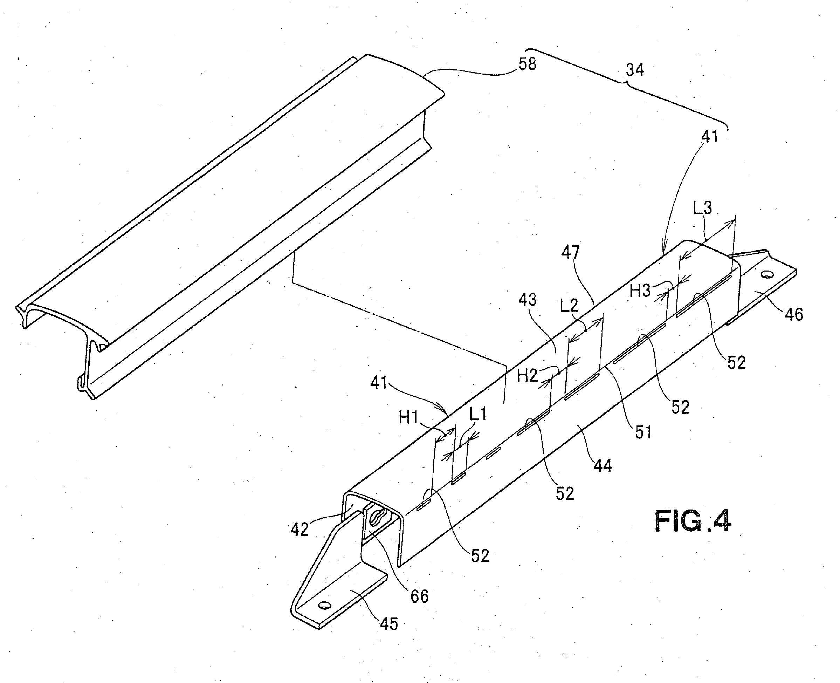

Furthermore, as shown in FIGS. 4 and 5, the core bar 41 has an outer corner part (corner part) 47 to which the pillar sidewall 42 and the lid part 43 are linked, a plurality of outer slits 48 formed in the outer corner part 47, an inner corner part 51 to which the lid part 43 and the window-glass-side wall 44 are linked, and a plurality of inner slits 52 formed in the inner corner part 51.

The lid part 43 is pivotably supported about the outer corner part 47. In other words, the outer corner part 47 is a location that serves the role of a hinge for pivotably supporting the lid part 43. The plurality of outer slits 48 is formed in the outer corner part 47 to thereby allow the strength of the outer corner part 47 to be adjusted. Forming the plurality of outer slits 48 on the outer corner part 47 thus allows the strength of the outer corner part 47 to be adjusted in accordance with the force (the deployment force of the airbag 35) that causes the lid part 43 to pivot.

The lid part 43 is linked to the pillar sidewall 42 of the core bar 41 via the outer corner part 47, and the lid part 43 is pivotably supported about the outer corner part 47. Accordingly, causing the deployment force of the airbag 35 to act on the lid part 43 when the airbag 35 deploys allows the lid part 43 to smoothly open upward about the outer corner part 47. The airbag 35 can thereby advantageously open along the right front pillar 11 so that the deployment direction of the airbag 35 is not blocked by the lid part 43.

Furthermore, the strength of the outer corner part 47 can be adjusted by the plurality of outer slits 48 being formed in the outer corner part 47. Thus, the lid part 43 can be smoothly opened upward about the outer corner part 47 when the deployment force of the airbag 35 acts on the lid part 43.

When the airbag 35 is to be filled with gas from the inflator 37 (FIG. 1), the airbag 35 is first filled with gas in the vicinity of the inflator 37, and is thereafter in the locations at a distance from the inflator 37. Accordingly, the deployment force of the airbag 35 is first generated in the vicinity of the inflator 37, and is thereafter generated in locations at a distance from the inflator 37.

The distances H1, H2, H3 between the outer slits 48 are set to be greater in the vicinity of the inflator 37 than in locations at a distance from the inflator 37 (FIG. 1). In other words, the distance H1 is greater than the distance H2, which is greater than the distance H3.

The slit lengths L1, L2, L3 of the outer slits 48 are set to be shorter in the vicinity of the inflator 37 than in locations at a distance from the inflator 37 (FIG. 1). In other words, the slit length L1 is less than the slit length L2, which is less than the slit length L3.

Accordingly, the outer corner part 47 in the vicinity of the 37 can be prevented from rupturing when the deployment force of the airbag 35 is generated in the vicinity of the inflator 37. Thus, when the deployment force of the airbag 35 acts on the lid part 43, the entire lid part 43 can be smoothly opened upward about the outer corner part 47 by the deployment force of the airbag 35.

The window-glass-side wall 44 is pivotably supported about the inner corner part 51 (see also FIG. 3). In other words, the inner corner part 51 serves the role of a hinge for pivotably supporting the window-glass-side wall 44. The strength of the inner corner part 51 can be adjusted by the plurality of inner slits 52 being formed on the inner corner part 51. Forming the plurality of inner slits 52 in the inner corner part 51 allows the strength of the inner corner part 51 to be adjusted in accordance with the force (the deployment force of the airbag 35) that causes the window-glass-side wall 44 to pivot.

The window-glass-side wall 44 is linked to the lid part 43 of the core bar 41 via the inner corner part 51, and the window-glass-side wall 44 is pivotably supported about the inner corner part 51. Accordingly, when the airbag 35 deploys, the window-glass-side wall 44 can be smoothly opened about the inner corner part 51 when the deployment force of the airbag 35 is made to act on the window-glass-side wall 44. The airbag 35 can thereby advantageously deploy along the right front pillar 11 so that the deployment direction of the airbag 35 is not blocked by the window-glass-side wall 44.

Forming a plurality of inner slits 52 in the inner corner part 51 allows the strength of the inner corner part 51 to be adjusted. Thus, the window-glass-side wall 44 can be smoothly opened about the inner corner part 51 when the deployment force of the airbag 35 is made to act on the window-glass-side wall 44.

The distances H1, H2, H3 between the inner slits 52 are set to be greater in the vicinity of the inflator 37 than in locations at a distance from the inflator 37 (FIG. 1), in the same manner as the outer slits 48. Furthermore, the slit lengths L1, L2, L3 of the inner slits 52 are set to be shorter in the vicinity of the inflator 37 than in locations at a distance from the inflator 37 (FIG. 1), in the same manner as the outer slits 48.

Accordingly, the inner corner part 51 in the vicinity of the inflator 37 can be prevented from rupturing when the deployment force of the airbag 35 is generated in the vicinity of the inflator 37. Thus, when the deployment force of the airbag 35 acts on the lid part 43, the entire window-glass-side wall 44 can be smoothly opened about the inner corner part 51 by the deployment force of the airbag 35.

The pillar sidewall 42 is extended in the longitudinal direction of the vehicle body along the right front pillar 11 and is formed mountable on the right front pillar 11. A plurality of first locking parts 61 for mounting on the plurality of stud members 25 is formed in the pillar sidewall 42.

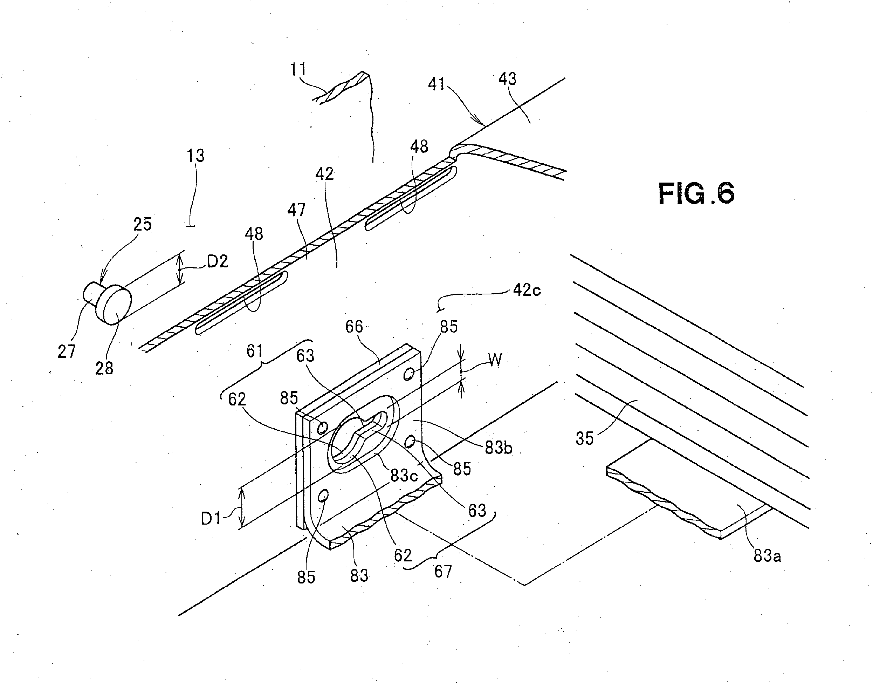

As shown in FIG. 6, the first locking parts 61 have a fitting hole 62 fittable onto the enlarged-diameter part 28, and a locking groove 63 in communication with the fitting hole 62. The locking groove 63 is in communication with the fitting hole 62, extends in the rearward direction of the vehicle body, is formed to a width W that is less than the hole diameter D1 of the fitting hole 62, and is formed fittable onto the support shaft 27. The width W of the locking groove 63 is formed to be less than the outside diameter D2 of the enlarged-diameter part 28.

A reinforcement plate 66 is provided to a location where the first locking parts 61 are formed in an inner sidewall 42c of the pillar sidewall 42. The reinforcement plate 66 is formed in a substantially rectangular shape and has a second locking part 67 formed in the center thereof. The second locking part 67 is formed in the same shape as the first locking parts 61 and is superposed on the first locking part 61. In other words, the second locking part 67 has a fitting hole 62 and a locking groove 63 in the same manner as the first locking part 61.

The locking grooves 63, 63 of the first and second locking parts 61, 67 are fitted onto the support shaft 27 of the stud member 25. The hole diameter D1 of the fitting hole 62 is formed to be about the same or about 0.1 mm larger than the outside diameter D2 of the enlarged-diameter part 28. Furthermore, the width W of the locking groove 63 is formed to be less than the outside diameter D2 of the enlarged-diameter part 28. Accordingly, the locking groove 63 can be prevented by the enlarged-diameter part 28 from dislodging from the support shaft 27 while the locking groove 63 is fitted onto the support shaft 27. The metal core bar 41 (pillar sidewall 42) is thereby mounted onto the inner wall 13 of the right front pillar 11 via the support shaft 27 (i.e., the stud member 25).

Mounting the pillar sidewall 42 on the inner wall 13 using the stud member 25 thus allows the garnish 34 to be held by the right front pillar 11 when the garnish 34 is opened by the deployment force of the airbag 35.

As shown in FIG. 3, the lid part 43 of the core bar 41 is extended from the upper end part of the pillar sidewall 42 toward the center side of the vehicle body, and is positioned above the airbag 35. The lid part 43 is positioned above the airbag 35, whereby an upper part 35b of the airbag 35 is covered by the lid part 43.

The window-glass-side wall 44 is made to extend out from the end part of the lid part 43 on the center side of the vehicle body toward the front windshield glass 16. Accordingly, the airbag 35 can be prevented by the window-glass-side wall 44 from expanding laterally toward the front windshield glass 16 side.

As shown in FIG. 2, the front mounting bracket 45 is fastened by a front nut 71 to the front stud bolt 31 protruding from the front location 12a of the flange part 12. The rear mounting bracket 46 is fastened by a rear nut 72 to the rear stud bolt 32 protruding from the rear location 12b of the flange part 12.

Thus, the metal core bar 41 (pillar sidewall 42) is mounted on the inner wall 13 of the right front pillar 11 via the stud member 25. Furthermore, the front mounting bracket 45 of the core bar 41 is fastened to the front location 12a of the flange part 12 by the front stud bolt 31 and the front nut 71, and the rear mounting bracket 46 of the core bar 41 is fastened to the rear location 12b of the flange part 12 by the rear stud bolt 32 and the rear nut 72. Accordingly, the core bar 41 (i.e., the garnish 34) can be firmly mounted to the right front pillar 11 and the garnish 34 can be even more reliably held to the right front pillar 11 when the garnish 34 is opened by the airbag 35 during deployment.

As shown in FIG. 3, the decorative resin part 58 of the garnish 34 is composed of an olefin-based elastomer (TPO) resin for covering the surface 41a of the core bar 41. The decorative resin part 58 has a resin layer 58a for covering the surface of the window-glass-side wall 44, a water-shielding extension part 58b extended out toward the center side of the vehicle body from the upper end part of the resin layer 58a, and a lip part 58c extended out toward the center side of the vehicle body from the lower end part of the resin layer 58a.

A water-shielding part 59 provided with water-shielding ability is formed by the resin layer 58a, the water-shielding extension part 58b, and the lip part 58c. Providing a water-shielding part 59 made of TPO resin to the decorative resin part 58 prevents water droplets on the surface of the front windshield glass 16 from penetrating the interior of the garnish 34, and furthermore smoothly guides the water droplets on the surface of the front windshield glass 16 downward along the water-shielding part 59.

The airbag 35 is bent or folded in accordion fashion and disposed on the flange part 12. Specifically, the airbag 35 folded in accordion fashion is disposed on a location 12c on the flange part 12, between the pillar sidewall 42 and the front windshield glass 16. The airbag 35 has a side part 35a on the front windshield glass 16 side, an upper part 35b, and a side part 35c on the pillar sidewall 42 side, which are covered by the garnish 34 (core bar 41).

A lower part 35d of the airbag 35 folded in accordion fashion is disposed in a position facing the location 12c of the flange part (vehicle body) 12. The upper part 35b of the airbag 35 is disposed in a position facing the lid part 43.

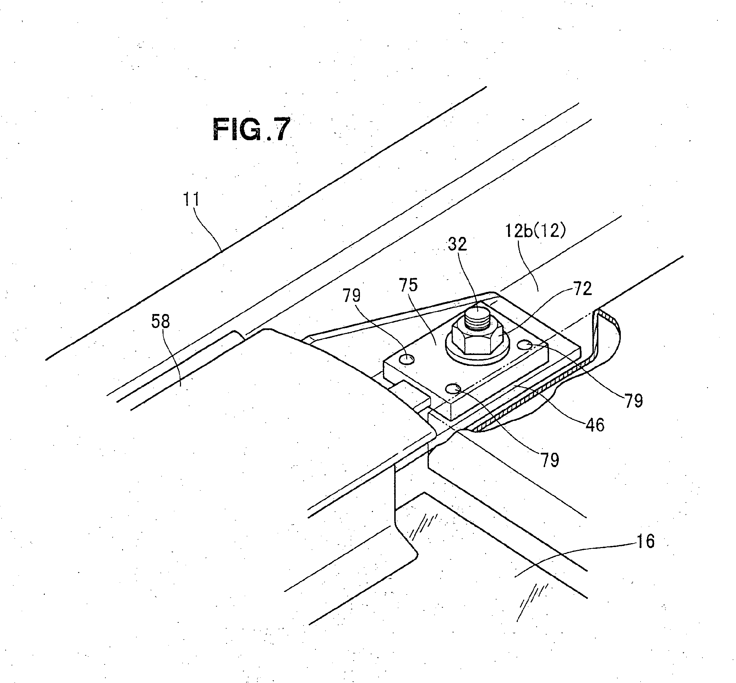

As shown in FIGS. 2 and 7, a front end part 35e of the airbag 35 is linked to the inflator 37 via a front linking part 74. The front linking part 74 is mounted on the front location 12a of the flange part 12 using a mounting member 76. A rear end part 35f of the airbag 35 is mounted on the rear mounting bracket 46 via a rear linking member 75. The rear linking member 75 is secured to the rear mounting bracket 46 using a plurality of rivets 79. The rear linking member 75 is fastened together with the rear mounting bracket 46 to the rear location 12b of the flange part 12 using the rear stud bolt 32 and the rear nut 72. The airbag 35 is linked to the pillar sidewall 42 using the connection means 36.

As shown in FIGS. 2 and 5, the connection means 36 includes a front strap 81 for linking the front end part 35e of the airbag. 35 to the stud member 25 on the front side, a rear strap 82 for linking the rear end part 35f of the airbag 35 to the stud member 25 on the rear side, and a center strap (connector) 83 for linking a center. location (hereinafter simply referred to as center lower location) 35g in the longitudinal direction on the lower part 35d of the airbag 35 to a center part 42d of the pillar sidewall 42.

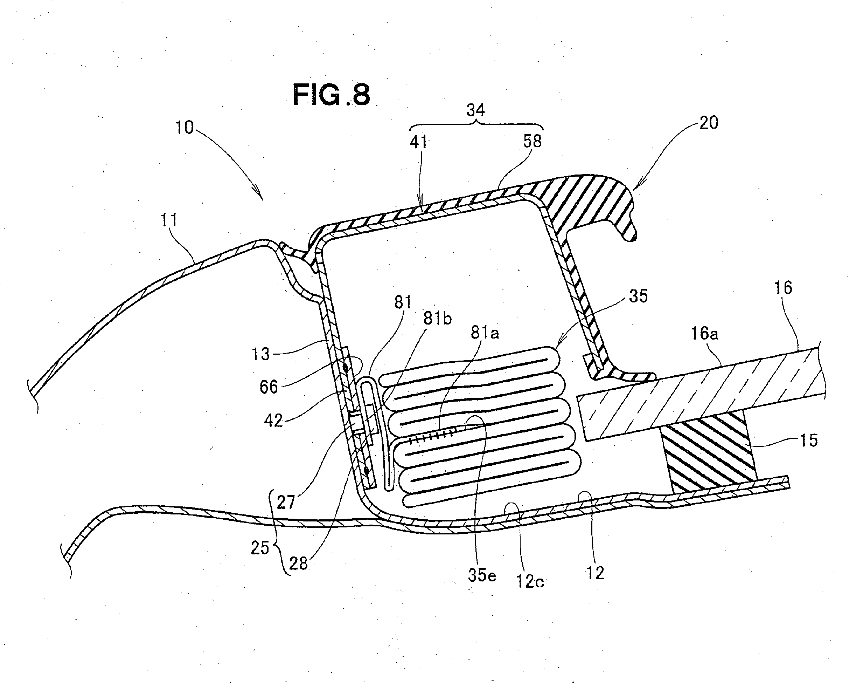

As shown in FIG. 8, one end part 81a of the front strap 81 is sewn onto the front end part 35e of the airbag 35, and the other end part 81b is locked onto the stud member 25 ,on the front side in the longitudinal direction of the vehicle body. The one end part of the rear strap 82 (FIG. 2) is sewn onto the rear end part 35f of the airbag 35, and the other end part 82b is locked onto the stud member 25 (FIG. 5) on the rear side in the longitudinal direction of the vehicle body, in the same manner as the front strap 81.

Thus, the front end part 35e and the rear end part 35f of the airbag 35 are linked to the stud member 25 using the front and rear straps 81, 82. Accordingly, the airbag 35 can be prevented from falling over to the front windshield glass 16 (FIG. 8) side during collision with an obstacle after the airbag 35 has deployed.

As shown in FIGS. 3 and 6, one end part 83a of the center strap 83 is sewn onto a center lower location 35g of the airbag 35, and the other end part 83b is superposed on the reinforcement plate 66. The reinforcement plate 66 is provided to the center part 42d of the pillar sidewall 42. The other end part 83b of the center strap 83 is locked to the reinforcement plate 66 of the center part 42d using a plurality of rivets 85. Accordingly, the other end part 83b of the center strap 83 is linked to the inner wall 13 of the right front pillar 11 via the pillar sidewall 42 and the plurality of stud members 25.

An opening 83c is formed in the other end part 83b of the center strap 83. The opening 83c is disposed so as to overlap the first and second locking parts 61, 67, and is formed larger than the first and second locking parts 61, 67. Accordingly, the center lower location 35g of the airbag 35 can be linked to the center part 42d of the pillar sidewall 42 using the center strap 83. Thus, the center lower location 35g can be supported by the center strap 83 during deployment (initial stage of deployment) of the airbag 35, and the airbag 35 can be prevented from tipping over sideways during deployment.

As shown in FIGS. 1 and 2, the inflator 37 is mounted on the vehicle body in a vehicle body front location of the front windshield glass 16 using a plurality of mounting bolts 87. The inflator 37 is in communication with the front end part 35e of the airbag 35 via the front linking part 74, and feeds gas to the airbag 35 when an impact acts on the front structure 10 of the vehicle.

Feeding gas from the inflator 37 to the airbag 35 via the front linking part 74 deploys the airbag 35. The garnish 34 can be pressed upward and opened by the deployment force produced when the airbag 35 deploys.

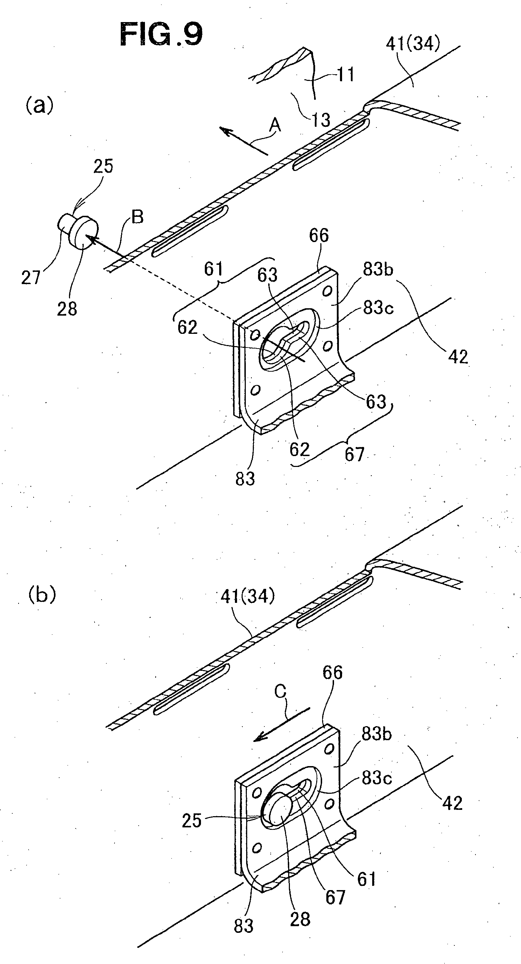

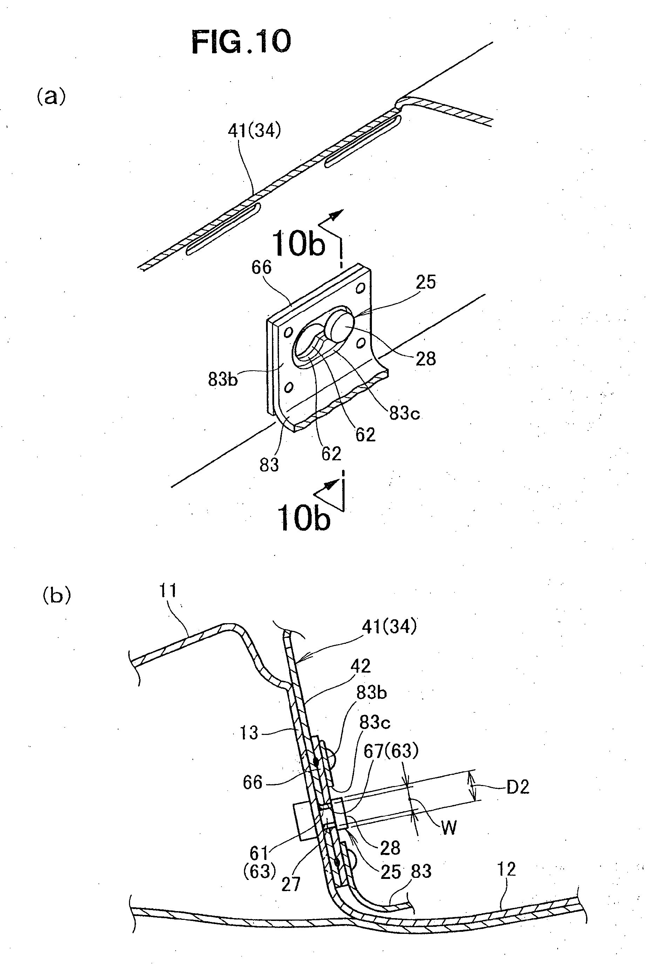

The procedure for mounting the garnish 34 on the inner wall 13 of the right front pillar 11 is next described with reference to FIGS. 9 and 10.

As shown in FIG. 9(a), the pillar sidewall 42 of the garnish 34 moves outward in the vehicle body lateral direction as indicated by the arrow A toward the inner wall 13 of the right front pillar 11. Accordingly, the first and second locking parts 61, 67 and the opening 83c fit, as indicated by the arrow B, onto the enlarged-diameter part 28 of the stud member 25 provided to the inner wall 13 of the right front pillar 11.

As shown in FIG. 9(b), the opening 83c and the fitting holes 62, 62 (see FIG. 9(a)) of the first and second locking parts 61, 67 are fitted onto the enlarged-diameter part 28, and the enlarged-diameter part 28 of the stud member 25 protrudes from the fitting holes 62, 62. In this state, the garnish 34 (i.e., the pillar sidewall 42) moves in the forward direction of the vehicle body as indicated by the arrow C.

As shown in FIGS. 10(a) and (b), the opening 83c and the first and second locking parts 61, 67 move in the forward direction of the vehicle body, whereby the locking grooves 63, 63 of the first and second locking parts 61, 67 are fitted onto the support shaft 27 of the stud member 25. As described above, the hole diameter D1 of the fitting hole 62 is formed to be about the same or about 0.1 mm larger than the outside diameter D2 of the enlarged-diameter part 28, and the width W of the locking groove 63 is formed to be less than the outside diameter D2 of the enlarged-diameter part 28. Accordingly, the locking groove 63 can be prevented by the enlarged-diameter part 28 from dislodging from the support shaft 27 while the locking groove 63 is fitted onto the support shaft 27. Thus, the garnish 34 (pillar sidewall 42) can be mounted onto the inner wall 13 of the right front pillar 11 via the support shaft 27 (i.e., the stud member 25).

As shown in FIGS. 9 and 10, the work for mounting the garnish 34 on the inner wall 13 of the right front pillar 11 can be carried out in a simple manner. In other words, the garnish 34 can be readily mounted in a simple operation in which the enlarged-diameter part 28 is first fitted into the fitting holes 62, 62 of the first and second locking parts 61, 67, and the support shaft 27 is then fitted into the locking grooves 63, 63 of the first and second locking parts 61, 67.

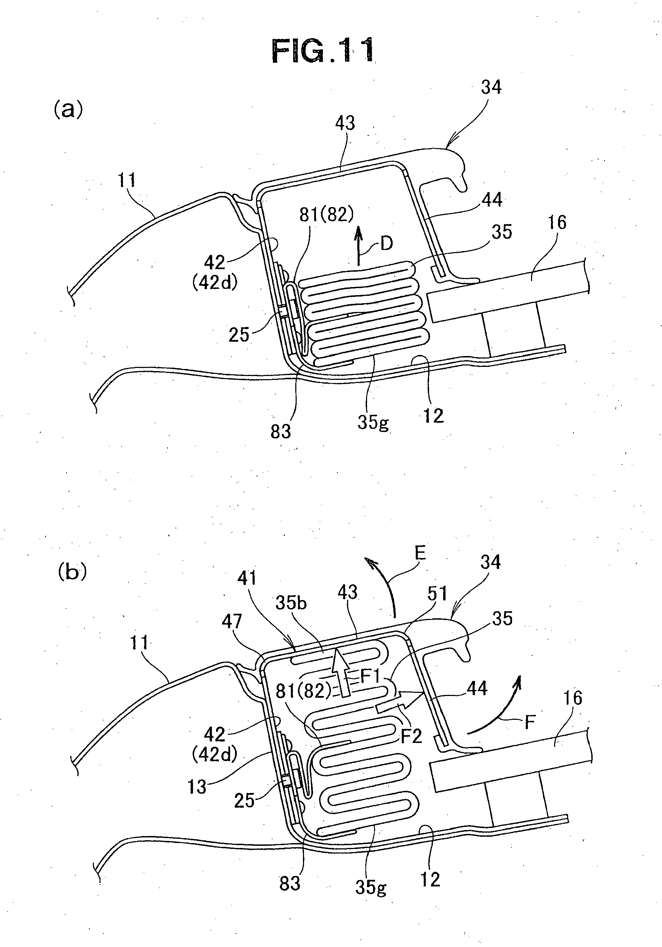

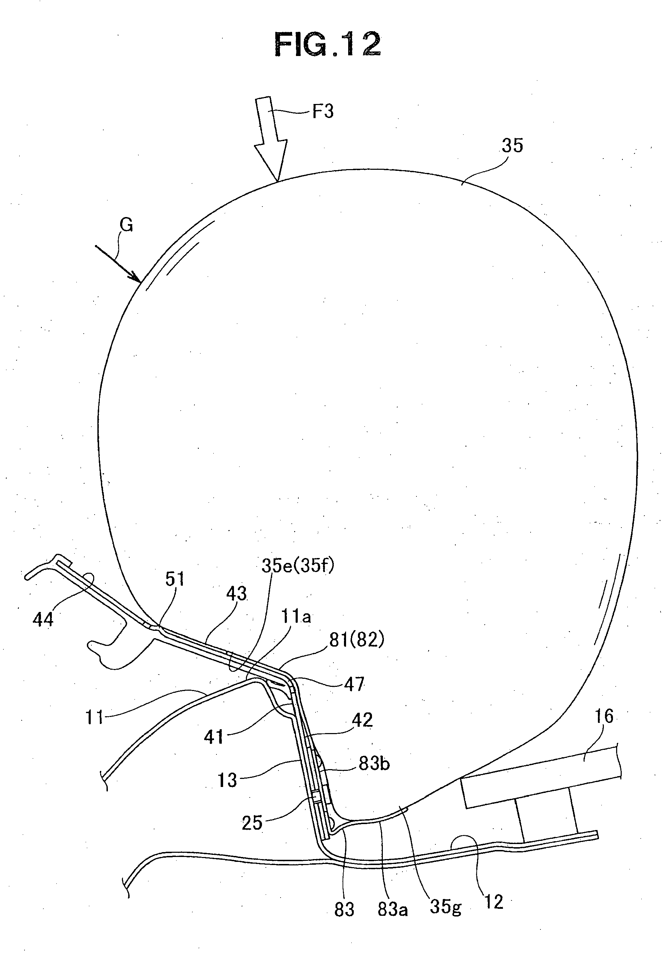

An example of the deploying of the airbag 35 is next described with reference to FIGS. 11 to 13. In FIGS. 11 and 12, both the center strap 83 and the front and rear straps 81, 82 are shown in order to facilitate understanding of the deployment actuation of the airbag 35.

As shown in FIG. 11(a), the airbag 35 is folded in accordion fashion and disposed between the pillar sidewall 42 and the front windshield glass 16. The center lower location 35g of the airbag 35 is linked to the center part 42d of the pillar sidewall 42 using the center strap 83. Feeding gas from the inflator 37 (FIG. 1) to the airbag 35 in this state deploys the airbag 35 as indicated by the arrow D.

As shown in FIG. 11(b), the airbag 35 deploys inside the garnish 34, whereby an upper part 35b of the airbag 35 abuts on the lid part 43 of the garnish 34. The upper part 35b abuts on the lid part 43 and the pressing force (i.e., deployment force) F1 of the airbag 35 acts on the lid part 43 as indicated by the arrow.

The lid part 43 is opened as indicated by the arrow E about the outer corner part 47 due to the deployment force F1 of the airbag 35 acting on the lid part 43. As the deployment of the airbag 35 progresses, the deployment force F2 of the airbag 35 acts on the window-glass-side wall 44 as indicated by the arrow.

The window-glass-side wall 44 opens about the inner corner part 51 as indicated by the arrow F due to the deployment force F2 of the airbag 35 acting on the window-glass-side wall 44. The garnish 34 can thereby be pressed upward and opened by the deployment force of the airbag 35.

The metal core bar 41 (pillar sidewall 42) is mounted on the inner wall 13 of the right front pillar 11 via the stud member 25. Thus, the garnish 34 can be held to the right front pillar 11 when the lid part 43 is opened by the deployment force F1 of the airbag 35 and furthermore when the window-glass-side wall 44 is opened by the deployment force F2 of the airbag 35.

The center lower location 35g of the airbag 35 is linked to the pillar sidewall 42 by the center strap 83. Accordingly, the center lower location 35g of the airbag 35 can be supported by the center strap 83 during deployment of the airbag (initial stage of deployment) 35. The center lower location 35g of the airbag 35 can be blocked by the center strap 83 from moving to the front windshield glass 16 side and the airbag 35 can be prevented from tipping over sideways.

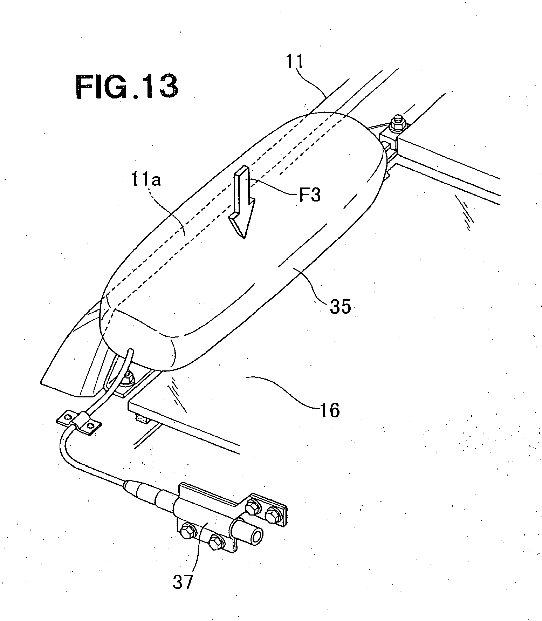

As shown in FIGS. 12 and 13, the garnish 34 is pressed upward and opened by the deployment force of the airbag 35, whereby the airbag 35 opens between the right front pillar 11 and the front windshield glass 16.

The center lower location 35g of the airbag 35 is linked to the pillar sidewall 42 using the center strap 83 and is therefore prevented from tipping over sideways during deployment of the airbag 35. In other words, the deployment direction of the airbag 35 can be restricted by the center strap 83 when the airbag 35 deploys. Restricting the deployment direction of the airbag 35 using the center strap 83 and preventing the airbag 35 from tipping over sideways during deployment causes the airbag 35 to deploy along the upper part 11a of the right front pillar 11.

It is possible that the upper body (unprotected part) of an obstacle will come into contact (make contact) as indicated by the arrow and the airbag 35 will tip over sideways before the upper end part (protection-required part) of an rod-shaped obstacle collides when the airbag 35 has deployed along the upper part 11a of the right front pillar 11. In view of this possibility, the center lower location 35g is linked to the pillar sidewall 42 using the center strap 83, and the front end part 35e and rear end part 35f of the airbag 35 are linked to the stud member 25 using the front and rear straps 81, 82.

Accordingly, the airbag 35 can be prevented from tipping over by the center strap 83 and the front and rear straps 81, 82 when the upper body (unprotected part) of an obstacle has come into contact (made contact) with the airbag 35 as indicated by the arrow G. Thus, the impact load F3 of the upper end part (protection-required part) of the obstacle can be reliably received (supported) by the airbag 35, and an impact that acts on the upper end part (protection-required part) of the obstacle can be advantageously alleviated by the airbag 35.

### Second embodiment

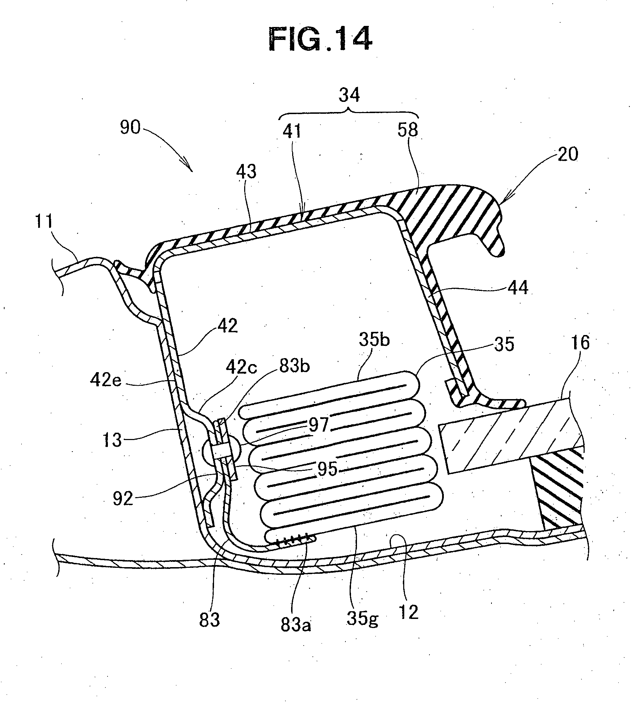

The airbag device 90 according to a second embodiment is next described with reference to FIG. 14. The same reference numerals used for elements that are the same as or analogous to those of the airbag device 20 of the first embodiment will be used in the airbag device 90 of the second embodiment, and a description will be omitted.

The airbag device 90 according to the second embodiment has different means for mounting the other end part 83b (mounting end part) of the center strap 83 to the pillar sidewall 42, but is otherwise configured in the same manner as the airbag device 20 according to the first embodiment.

In other words, the pillar sidewall 42 has a recess 92 formed in an outer wall surface 42e facing the inner wall 13 of the right front pillar 11. Forming the recess 92 in the outer wall surface 42e of the pillar sidewall 42 causes the inner sidewall 42c of the pillar sidewall 42 to protrude to the airbag 35 side.

The other end part 83b of the center strap 83 is superposed on the protruding inner sidewall 42c, and a metal plate 95 is superposed on the other end part 83b. The metal plate 95 is a plate material formed, e.g., substantially in a rectangular shape. The metal plate 95 and the recess 92 are fastened by rivets (fastening member) 97 while the other end part 83b is held between the metal plate 95 and the recess 92.

Thus, the metal plate 95 and the recess 92 are fastened by rivets 97 to mount the other end part 83b of the center strap 83 on the recess 92 (inner sidewall 42c). The other end part 83b of the center strap 83 can be firmly mounted on the recess 92 (inner sidewall 42c).

Additionally, forming the recess 92 on the pillar sidewall 42 allows the location for mounting the other end part 83b of the center strap 83 to be arbitrarily selected. Arbitrarily selecting the location for mounting the other end part 83b allows the degree of freedom of design to be increased.

In the airbag device 90 of the second embodiment, the same effects as those of the airbag device 20 of the first embodiment can be obtained.

The airbag device according to the present invention is not limited to the first and second embodiments described above, and can be suitably modified, improved, or otherwise varied. For example, in the first and second embodiments, an example was described in which a plurality of outer slits 48 is formed in the outer corner part 47 and a plurality of inner slits 52 is formed in the inner corner part 51, but no limitation is imposed thereby. It is also possible to use a configuration in which slits are not formed in the outer corner part 47 and the inner corner part 51. Furthermore, an example was described in which a plurality of outer slits 48 and inner slits 52 is provided, but no limitation is imposed thereby. It is also possible to provide a single outer slit 48 and/or inner slit 52.

In the first embodiment, an example was described in which the other end part 83b of the center strap 83 is locked onto the reinforcement plate 66 and the pillar sidewall 42 by a plurality of rivets 85, but no limitation is imposed thereby. It is also possible to lock the other end part 83b of the center strap 83 to the stud member 25 couple the other end part 83b to the inner wall 13 of the right front pillar 11

In the second embodiment, the rivets 97 were described as a fastening member for mounting the other end part 83b of the center strap 83, but no limitation is imposed thereby. It is also possible to use a bolt or other fastening means.

In the first and second embodiments, examples were described in which the airbag devices 20, 90 are provided to the right front pillar 11, but no limitation is imposed thereby. It is also possible to provide the airbag devices 20, 90 to the left front pillar 11.

The shape and/or configuration of the airbag device 20, 90, the right front pillar 11, the flange part 12, the front windshield glass 16, the stud member 25, the garnish 34, the airbag 35, the inflator 37, the core bar 41, the pillar sidewall 42, the lid part 43, the window-glass-side wall 44, the front mounting bracket 45, the rear mounting bracket 46, the outer corner part 47, the outer slits 48, the decorative resin part 58, the first locking part 61, the fitting hole 62, the locking groove 63, the center strap 83, the recess 92, the metal plate 95, and the like is not limited to those exemplified in the first and second embodiments, and may be suitably modified.

### Third embodiment

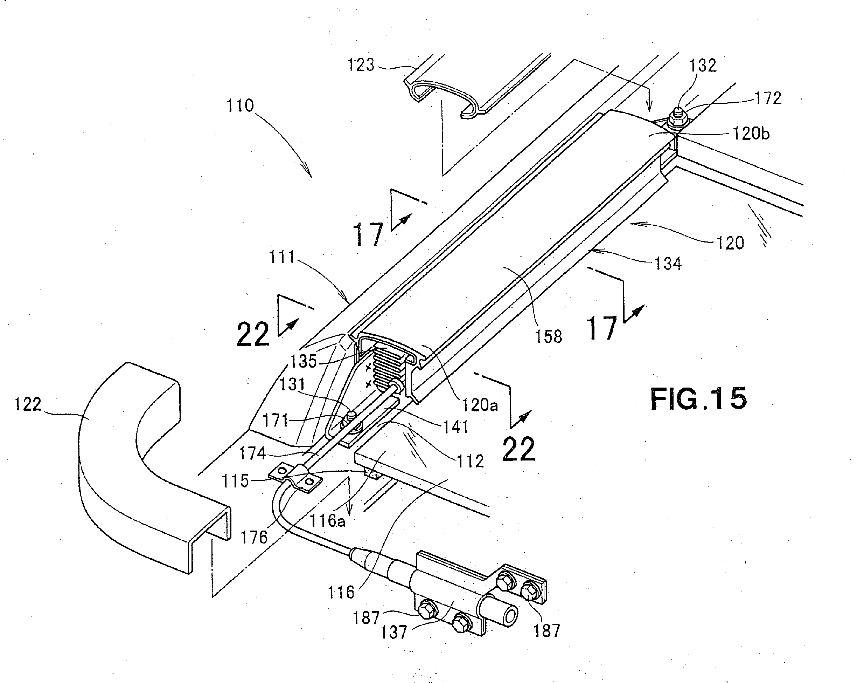

The airbag device 120 according to a third embodiment is next described with reference to FIGS. 15 to 27. The same reference numerals are used for elements that are the same as those described in the first embodiment of FIGS. 1 to 13.

As shown in FIG. 15, the front structure 110 of the vehicle body includes a right front pillar 111 provided to the right side part of the vehicle body, a front windshield glass 116 in which a right end part 116a is disposed on a flange part (vehicle body) 112 of the right front pillar 111 via a seal 115, an airbag device 120 of the third embodiment provided between the front windshield glass 116 and the right front pillar 111, a cowl cover 122 provided to a front end part 120a of the airbag device 120, and a side roof rail cover 123 provided to the rear end part 120b of the airbag device 120.

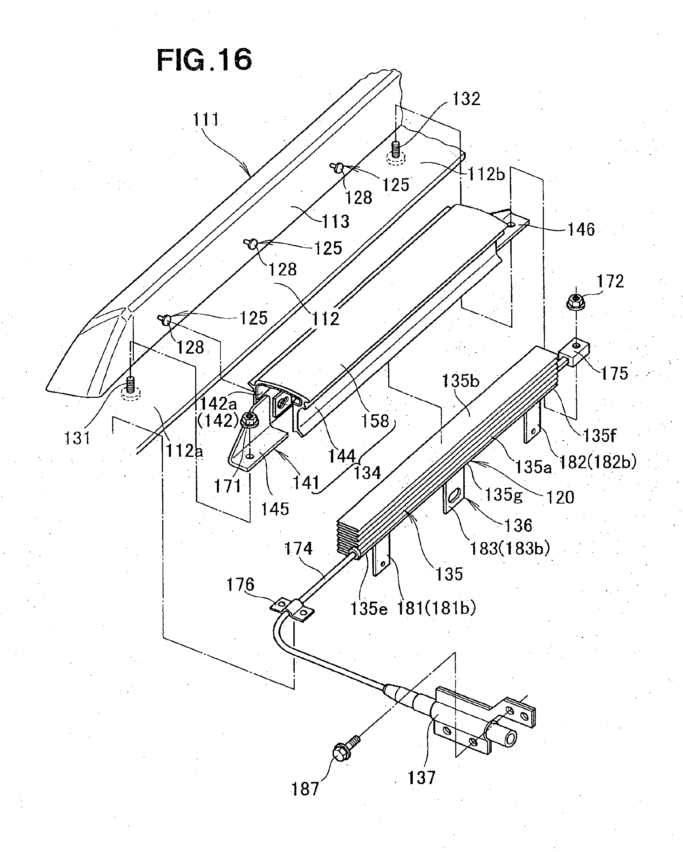

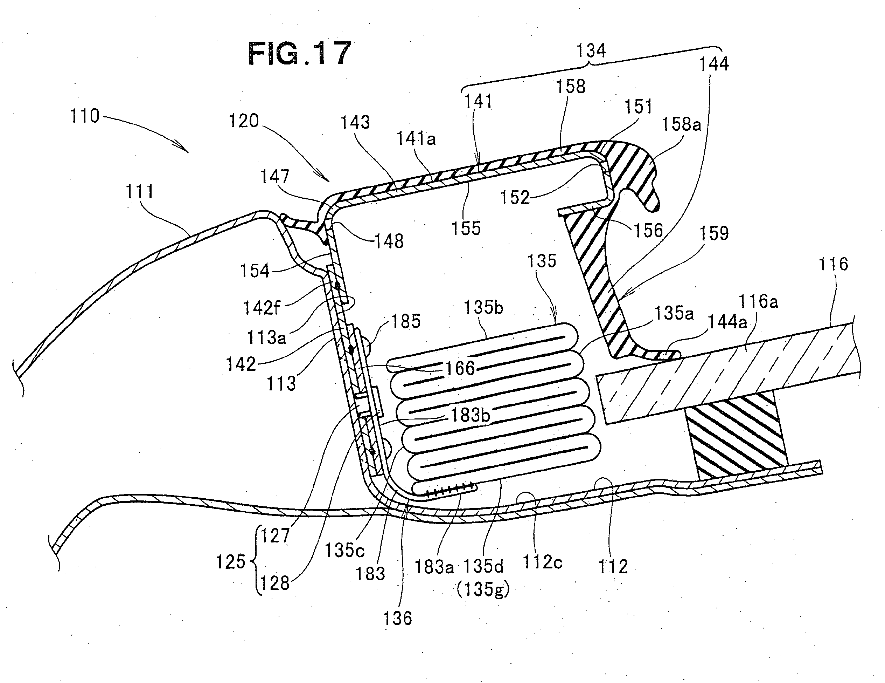

As shown in FIGS. 16 and 17, the right front pillar 111 has an inner wall 113 provided upright to the center side of the vehicle body, and a plurality of stud members 125 provided to the inner wall 113 at predetermined intervals in the longitudinal direction of the vehicle body.

Each of the plurality of stud members 125 has a support shaft 127, the base end part of which is welded to an outer surface 113a of the inner wall 113, and an enlarged-diameter part 128 formed at the distal end part (end part) of the support shaft 127. Welding the base end part of the support shaft 127 to the outer surface 113a provides the support shaft 127 in a protruding manner from the outer surface 113a toward the direction of the airbag 135. The enlarged-diameter part 128 is formed at the distal end of the support shaft 127 that protrudes from the outer surface 113a.

A front stud bolt 131 protrudes upward from a location (hereinafter referred to as "front location") 112a on the front end part of the flange part 112, between the inner wall 113 of the right front pillar 111 and the front windshield glass 116. A rear stud bolt 132 protrudes upward from a location (hereinafter referred to as "rear location") 112b on the rear end part of the flange part 112, between the inner wall 113 of the right front pillar 111 and the front windshield glass 116.

The airbag device 120 includes a garnish 134 provided to the right front pillar 111, an airbag (bag body) 135 accommodated inside the garnish 134, connection means 136 for linking the airbag 135 to the right front pillar 111, and an inflator 137 (FIG. 15) in communication with the airbag 135.

The garnish 134 extends so as to form an upward slope in the rearward direction of the vehicle body along the right front pillar 111. The garnish 134 includes a metal core bar 141 mounted on the right front pillar 111, a window-glass-side wall 144 made of resin provided to the end part (inner end part) 156 of the core bar 141, and a decorative resin part 158 formed on the surface 141a of the core bar 141. The window-glass-side wall 144 and the decorative resin part 158 are integrally molded.

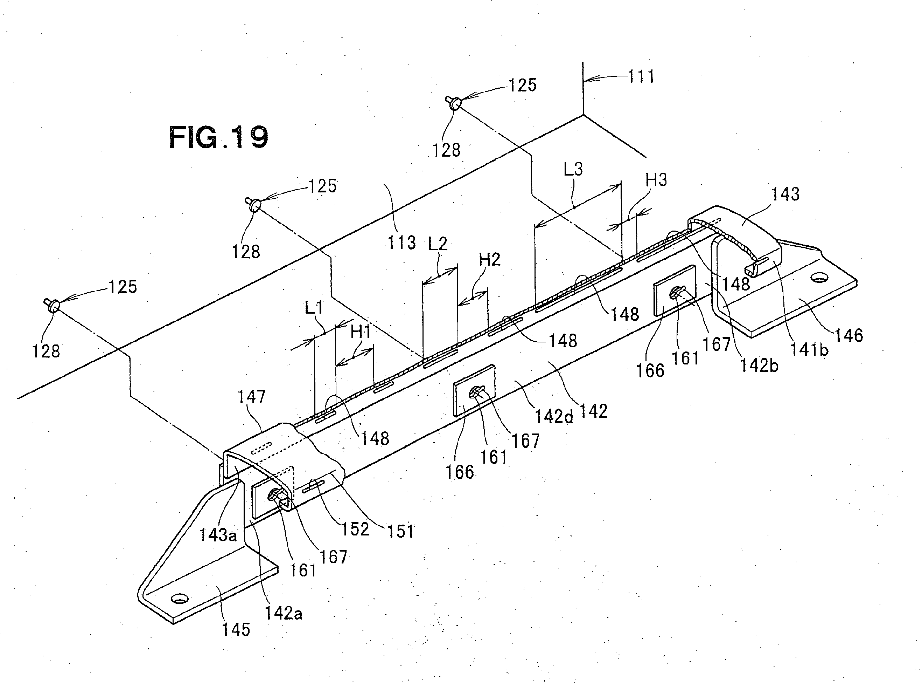

The core bar 141 has a pillar sidewall 142 along the right front pillar 111, a lid part 143 extended in the lateral direction from the upper end part 142f of the pillar sidewall 142, a front mounting bracket 145 provided to the front end part 142a of the pillar sidewall 142, and a rear mounting bracket 146 provided to the rear end part 142b (see FIG. 19) of the pillar sidewall 142.

The pillar sidewall 142 and the lid part 143 are composed of two separate members, and the two members are integrally spot-welded together (fused) or otherwise joined. Dividing the core bar 141 into a pillar sidewall 142 and a lid part 143 allows the divided members (the pillar sidewall 142 and the lid part 143) to be made smaller, and allows the shape of the divided members (the pillar sidewall 142 and the lid part 143) to be simplified. Thus, manufacture of the core bar 141 is facilitated, and the mold for molding the core bar 141 can be made smaller. Therefore, installation costs and the cost of the core bar 141 can be reduced.

The window-glass-side wall 144 made of resin is provided to the end part (inner end part) 56 of the core bar 141, and the core bar 141 and the window-glass-side wall 144 are thereby formed substantially in a U shape. The window-glass-side wall 144 can prevent the airbag 135 from diverting to the front windshield glass 116 side when the lid part 143 opens upward under the pressing force (i.e., the deployment force of the airbag 135) generated when the airbag 135 deploys. Thus, the airbag 135 can be suitably deployed along the right front pillar 111. The deployment force of the airbag 135 is referred to as the pressing force that acts on the core bar 141 when the airbag 135 deploys.

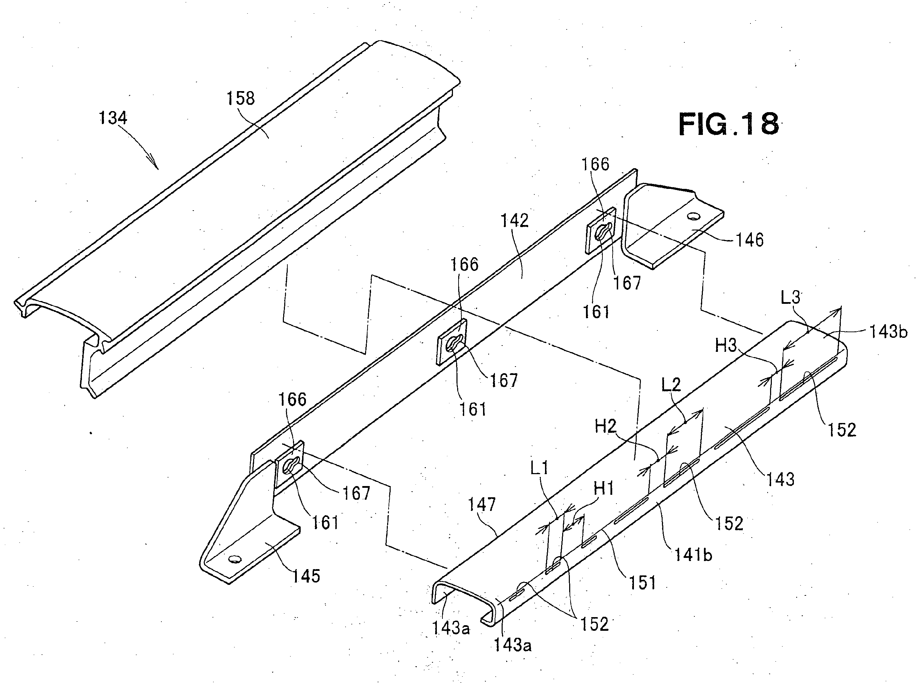

Furthermore, as shown in FIGS. 18 and 19, the core bar 141 has an outer corner part (corner part) 147 provided to the lid part 143, a plurality of outer slits 148, an inner corner part 151, and a plurality of inner slits 152. The outer corner part 147 is provided to a linking part (location) 154 (FIG. 17) of the lid part 143 that is joined to the pillar sidewall 142. The plurality of outer slits 148 is formed in the outer corner part 147 in the longitudinal direction of the vehicle body. The inner corner part 151 is provided to the inner end part (end part of the core bar 141) 156 of the lid part 143. The plurality of inner slits 152 is formed in the inner corner part 151 in the longitudinal direction of the vehicle body.

The lid part 143 is pivotably supported about the outer corner part 147 while the linking part 154 of the lid part 143 is joined to the pillar sidewall 142. In other words, the outer corner part 147 serves the role of a hinge for pivotably supporting the lid part 143. The plurality of outer slits 148 is formed in the outer corner part 147 to thereby allow the strength of the outer corner part 147 to be adjusted. Forming the plurality of outer slits 148 on the outer corner part 147 thus allows the strength of the outer corner part 147 to be adjusted in accordance with the force (the deployment force of the airbag 135) that causes the lid part 143 to pivot.

The lid part 143 is provided to the outer corner part 147, whereby the lid part 143 is pivotably supported about the outer corner part 147. Accordingly, causing the deployment force of the airbag 135 to act on the lid part 143 when the airbag 135 deploys allows the lid part 143 to smoothly open upward about the outer corner part 147. The airbag 135 can thereby advantageously deploy along the right front pillar 111 so that the deployment direction of the airbag 135 is not blocked by the lid part 143.

Furthermore, the strength of the outer corner part 147 can be adjusted by the plurality of outer slits 148 being formed in the outer corner part 147. Thus, the lid part 143 can be smoothly opened upward about the outer corner part 147 when the deployment force of the airbag 135 acts on the lid part 143.

When the airbag 135 is to be filled with gas from the inflator 137 (FIG. 15), the airbag 135 is first filled with gas in the vicinity of the inflator 137, and thereafter in the locations at a distance from the inflator 137. Accordingly, the deployment force of the airbag 135 is first generated in the vicinity of the inflator 137, and is thereafter generated in locations at a distance from the inflator 137.

The distances H1, H2, H3 between the plurality of outer slits 48 are set to be greater in the vicinity of the inflator 137 than in locations at a distance from the inflator 137 (FIG. 15). In other words, the distance H1 is greater than the distance H2, which is greater than the distance H3. The slit lengths L1, L2, L3 of the plurality of outer slits 148 are set to be shorter in the vicinity of the inflator 137 than in locations at a distance from the inflator 137 (FIG. 15). In other words, the slit length L1 is less than the slit length L2, which is less than the slit length L3 in similar fashion to the first embodiment.

Accordingly, the outer corner part 147 in the vicinity of the inflator 137 can be prevented from rupturing when the deployment force of the airbag 135 is generated in the vicinity of the inflator 137. Thus, when the deployment force of the airbag 135 acts on the lid part 143, the entire lid part 143 can be smoothly opened upward about the outer corner part 147 by the deployment force of the airbag 135.

The window-glass-side wall 144 is pivotably supported about the inner corner part 151 (see also FIG. 17). In other words, the inner corner part 151 serves the role of a hinge for pivotably supporting the lid wall. The strength of the inner corner part 151 can be adjusted by the plurality of inner slits 152 being formed on the inner corner part 151. Forming the plurality of inner slits 152 in the inner corner part 151 allows the strength of the inner corner part 151 to be adjusted in accordance with the force (the deployment force of the airbag 135) that causes the window-glass-side wall 414 to pivot.

The window-glass-side wall 144 is linked to the lid part 143 of the core bar 141 via the inner corner part 151, and the window-glass-side wall 144 is pivotably supported about the inner corner part 151. Accordingly, when the airbag 135 deploys, the window-glass-side wall 144 can be smoothly opened about the inner corner part 151 when the deployment force of the airbag 135 is made to act on the window-glass-side wall 144. The airbag 135 can thereby advantageously deploy along the right front pillar 111 so that the deployment direction of the airbag 135 is not blocked by the window-glass-side wall 144.

Forming a plurality of inner slits 152 in the inner corner part 151 allows the strength of the inner corner part 151 to be adjusted. Thus, the window-glass-side wall 144 can be smoothly opened about the inner corner part 151 when the deployment force of the airbag 135 is made to act on the window-glass-side wall 144.

The distances H1, H2, H3 between the inner slits 152 are set to be greater in the vicinity of the inflator 137 than in locations at a distance from the inflator 137 (FIG. 15), in the same manner as the outer slits 148. Furthermore, the slit lengths L1, L2, L3 of the inner slits 152 are set to be shorter in the vicinity of the inflator 137 than in locations at a distance from the inflator 137 (FIG. 15), in the same manner as the outer slits 148.

Accordingly, the inner corner part 151 in the vicinity of the inflator 137 can be prevented from rupturing when the deployment force of the airbag 135 is generated in the vicinity of the inflator 137. Thus, when the deployment force of the airbag 135 acts on the lid part 143, the entire window-glass-side wall 144 can be smoothly opened about the inner corner part 151 by the deployment force of the airbag 135.

The pillar sidewall 142 is extended in the longitudinal direction of the vehicle body along the right front pillar 111 and is formed countable on the right front pillar 111. A plurality of first locking parts 161 for mounting on the plurality of stud members 125 is formed in the pillar sidewall 142.

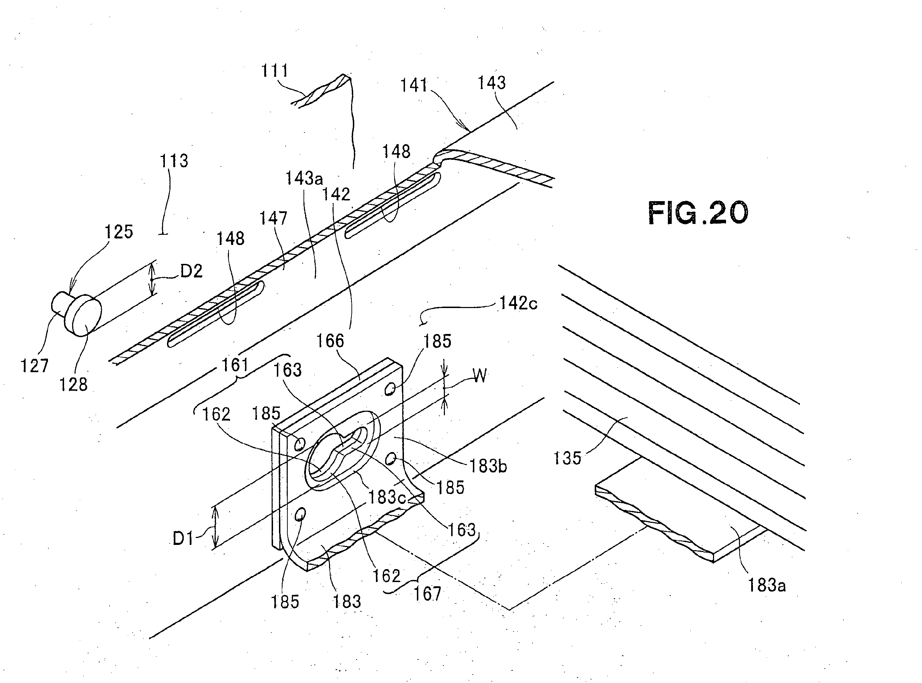

As shown in FIG. 20, the first locking parts 161 have a fitting hole 162 fittable onto the enlarged-diameter part 128, and a locking groove 163 in communication with the fitting hole 162. The locking groove 163 is in communication with the fitting hole 162, extends in the rearward direction of the vehicle body, is formed to a width W that is less than the hole diameter D1 of the fitting hole 162, and is formed fittable onto the support shaft 127. The width W of the locking groove 163 is formed to be less than the outside diameter D2 of the enlarged-diameter part 128.

A reinforcement plate 166 is provided to a location where the first locking parts 161 are formed in an inner sidewall 142c of the pillar sidewall 142. The reinforcement plate 166 is formed in a substantially rectangular shape and has a second locking part 167 formed in the center thereof. The second locking part 167 is formed in the same shape as the first locking parts 161 and is superposed on the first locking part 161. In other words, the second locking part 167 has a fitting hole 162 and a locking groove 163 in the same manner as the first locking part 161.

The locking grooves 163, 163 of the first and second locking parts 161, 167 are fitted onto the support shaft 127 of the stud member 125. The hole diameter D1 of the fitting hole 162 is formed to be about the same or about 0.1 mm larger than the outside diameter D2 of the enlarged-diameter part 128. Furthermore, the width W of the locking groove 163 is formed to be less than the outside diameter D2 of the enlarged-diameter part 128. Accordingly, the locking groove 163 can be prevented by the enlarged-diameter part 128 from dislodging from the support shaft 127 while the locking groove 163 is fitted onto the support shaft 127. The metal core bar 141 (pillar sidewall 142) is thereby mounted onto the inner wall 113 of the right front pillar 111 via the support shaft 127 (i.e., the stud member 125).

Mounting the pillar sidewall 142 on the inner wall 113 of the right front pillar 111 using the stud member 125 thus allows the garnish 134 to be held by the right front pillar 111 when the garnish 134 (FIG. 17) is opened by the deployment force of the airbag 135.

As shown in FIGS. 17 and 18, the lid part 143 of the core bar 141 has the linking part 154 joined to the upper end part 142f of the pillar sidewall 142, a lid body 155 extending from the linking part 154 to the center side of the vehicle body, and an inner end part 156 provided to the end of the lid body 155 that is on the center side of the vehicle body.

Furthermore, the lid part 143, as described above, has an outer corner part 147 for linking the linking part 154 and the lid body 155 together, a plurality of outer slits 148 formed in the outer corner part 147, an inner corner part 151 for linking the lid body 155 and the inner end part 156, and a plurality of inner slits 152 formed in the inner corner part 151.

The lid body 155 is extended from the linking part 154 toward the center of the vehicle body, and the lid body 155 is thereby positioned above the airbag 135. The lid part 143 is positioned above the airbag 135, whereby the upper part 135b of the airbag 135 is covered by the lid part 143.

Described next is the reason for separating the lid part 143 as a single member from the pillar sidewall 142 or the window-glass-side wall 144. In other words, some of the garnishes 134 have a height that gradually decreases rearward from the front part of the vehicle body (i.e., the pillar sidewall 142 and/or the window-glass-side wall 144). The height of the pillar sidewall 142 or the window-glass-side wall 144 gradually decreases because the height of the garnish 134 gradually decreases.

Accordingly, when the pillar sidewall 142 or the window-glass-side wall 144 are integrally formed with the lid part 143, the cross-sectional shape of the integrally molded member gradually decreases and changes from the front end part toward the rear end part. As a result, it is difficult to mold an integrally molded member by roll forming, and full automation is not possible using roll forming.

In view of the above, the lid part 143 is given the same cross-sectional shape from the front end part 143a to the rear end part 143b, as an individual member in which the lid part 143 is a separate member from the pillar sidewall 142 or the window-glass-side wall 144. Forming the lid part 143 with the same cross-sectional shape from the front end part 143a to the rear end part 143b allows the lid part 143 to be molded by roll forming. Forming the lid part 143 by roll forming makes mass production of the lid part 143 possible by full automation, and allows the cost of the lid part 143 to be reduced.

Additionally, separating the lid part 143 from the pillar sidewall 142 or the window-glass-side wall 144 allows, e.g., the height of the pillar sidewall 142 or the window-glass-side wall 144 to be readily varied from the front of the vehicle body toward the rear. Accordingly, the upper curved surface of the lid part 143 in the longitudinal direction of the vehicle body can be readily changed. Thus, the upper curved surface of the lid part 143 can be readily made to conform to the curve of the outer plate of the vehicle body, and the degree of freedom of design can be increased.

The window-glass-side wall 144 extends from the inner end part (the end part of the core bar 141 that is positioned above the front windshield glass 116) 156 of the lid part 143 toward the front windshield glass 116. Accordingly, the airbag 135 can be prevented by the window-glass-side wall 144 from deploying laterally toward the front windshield glass 116 side when the airbag 135 deploys.

Furthermore, a window-glass-side wall 144 made of resin is provided to the metal core bar 141 to thereby form a garnish 134 using two members, i.e., the core bar 141 and the window-glass-side wall 144. Accordingly, the window-glass-side wall 144 can be an independent member, and the height of the window-glass-side wall 144 can be readily adjusted. Thus, the degree of freedom for determining the height (depth) of the garnish 134 can be increased.

As shown in FIG. 16, the front mounting bracket 145 is fastened by a front nut 171 to the front stud bolt 131 protruding from the front location 112a of the flange part 112. The rear mounting bracket 146 is fastened by a rear nut 172 to the rear stud bolt 132 protruding from the rear location 112b of the flange part 112.

Thus, the metal core bar 141 (pillar sidewall 142) is mounted on the inner wall 113 of the right front pillar 111 via the stud member 125. The front mounting bracket 145 of the core bar 141 is fastened to the front location 112a of the flange part 112 by the front stud bolt 131 and the front nut 171. The rear mounting bracket 146 of the core bar 141 is fastened to the rear location 112b of the flange part 112 by the rear stud bolt 132 and the rear nut 172. Accordingly, the core bar 141 (i.e., the garnish 134) can be firmly mounted to the right front pillar 111. Thus, the garnish 134 can be even more reliably held to the right front pillar 111 when the garnish 134 is opened by the airbag 135 during deployment.

As shown in FIG. 17, the decorative resin part 158 of the garnish 134 is an olefin-based elastomer (TPO) resin for covering the surface 141a of the core bar 141. The decorative resin part 158 has a water-shielding extension part 158a extending from the end part 156 of the core bar 141 toward the center side of the vehicle body.

The window-glass-side wall 144 is a member made of TPO resin as is the decorative resin part 158, and has a lip part 144a extended from the lower end part toward the center side of the vehicle body.

A water-shielding part 159 provided with a water-shielding ability by the window-glass-side wall 144, the water-shielding extension part 158a and the lip part 144a. Providing a water-shielding part 159 made of TPO resin to the garnish 134 prevents water droplets on the surface of the front windshield glass 116 from penetrating the interior of the garnish 134, and furthermore smoothly guides the water droplets on the surface of the front windshield glass 116 downward along the water-shielding part 159.

The airbag 135 is folded in accordion fashion and disposed on the flange part 112. Specifically, the airbag 135 folded in accordion fashion is disposed on a location 112c on the flange part 112, between the pillar sidewall 142 and the front windshield glass 116. The airbag 135 has a side part 135a on the front windshield glass 116 side, an upper part 135b, and a side part 135c on the pillar sidewall 142 side, which are covered by the garnish 134 (core bar 141).

A lower part 135d of the airbag 135 folded in accordion fashion is disposed in a position facing the location 112c of the flange part (vehicle body) 112. Furthermore, the upper part 135b of the airbag 135 folded in accordion fashion is disposed in a position facing the lid part 143.

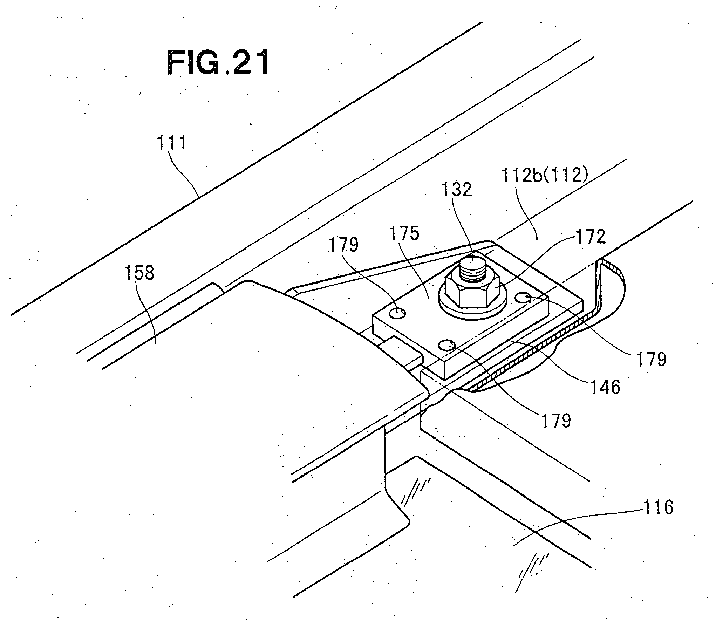

As shown in FIGS. 16 and 21, a front end part 135e of the airbag 135 is linked to the inflator 137 via a front linking part 174. The front linking part 174 is mounted on the front location 112a of the flange part 112 using a mounting member 176. A rear end part 135f of the airbag 135 is mounted on the rear mounting bracket 146 via a rear linking member 175. The rear linking member 175 is secured to the rear mounting bracket 146 using a plurality of rivets 179. The rear linking member 175 is fastened together with the rear mounting bracket 146 to the rear location 112b of the flange part 112 using the rear stud bolt 132 and the rear nut 172. The airbag 135 is linked to the pillar sidewall 142 using the connection means 136.

As shown in FIGS. 16 and 19, the connection means 136 includes a front strap 181 for linking the front end part 135e of the airbag 135 to the stud member 125 on the front side, a rear strap 182 for linking the rear end part 135f of the airbag 135 to the stud member 125 on the rear side, and a center strap (connector) 183 for linking a center location (hereinafter simply referred to as center lower location) 135g in the longitudinal direction on the lower part 135d (FIG. 17) of the airbag 135 to a center part 142d of the pillar sidewall 142.

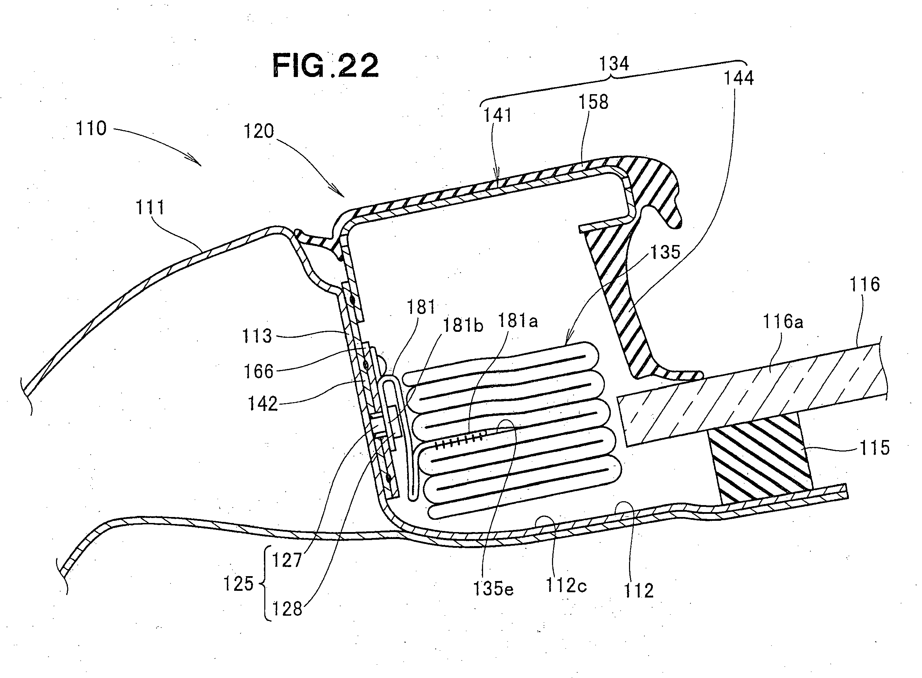

As shown in FIG. 22, one end part 181a of the front strap 181 is sewn onto the front end part 135e of the airbag 135, and the other end part 181b is locked onto the stud member 125 on the front side in the longitudinal direction of the vehicle body. The one end part of the rear strap 182 (FIG. 16) is sewn onto the rear end part 135f of the airbag 135, and the other end part 182b is locked onto the stud member 125 (FIG. 19) on the rear side in the longitudinal direction of the vehicle body, in the same manner as the front strap 181.

Thus, the front end part 135e and the rear end part 135f of the airbag 135 are linked to the stud member 125 using the front and rear straps 181, 182. Accordingly, the airbag 135 can be prevented from falling over to the front windshield glass 116 (FIG. 22) side during a collision with an obstacle after the airbag 135 has deployed.

As shown in FIGS. 17 and 20, one end part 183a of the center strap 183 is sewn onto a center lower location 135g of the airbag 135, and the other end part 183b is superposed on the reinforcement plate 166. The reinforcement plate 166 is provided to the center part 142d (FIG. 19) of the pillar sidewall 142. The other end part 183b of the center strap 183 is locked to the reinforcement plate 166 of the center part 142d using a plurality of rivets 185. Accordingly, the other end part 183b of the center strap 83 is linked to the inner wall 113 of the right front pillar 111 via the pillar sidewall 142 and the plurality of stud members 125.

An opening 183c is formed in the other end part 183b of the center strap 183. The opening 183a is disposed so as to overlap the first and second locking parts 161, 167, and is formed larger than the first and second locking parts 161, 167. Accordingly, the center lower location 135g (FIG. 17) of the airbag 135 can be linked to the center part 142d of the pillar sidewall 142 using the center strap 183. Thus, the center lower location 135g can be supported by the center strap 183 during deployment (initial stage of deployment) of the airbag 135, and the airbag 135 can be prevented from tipping over sideways during deployment.

As shown in FIGS. 15 and 16, the inflator 137 is mounted on the vehicle body in a vehicle body front location of the front windshield glass 116 using a plurality of mounting bolts 187. The inflator 137 is in communication with the front end part 135e of the airbag 135 via the front linking part 174, and feeds gas to the airbag 135 when an impact acts on the front structure 110 of the vehicle.

Gas is fed from the inflator 137 to the airbag 135 via the front linking part 174 to thereby cause the airbag 135 to deploy. The garnish 134 is pressed upward and opened by the deployment force produced when the airbag 135 deploys.

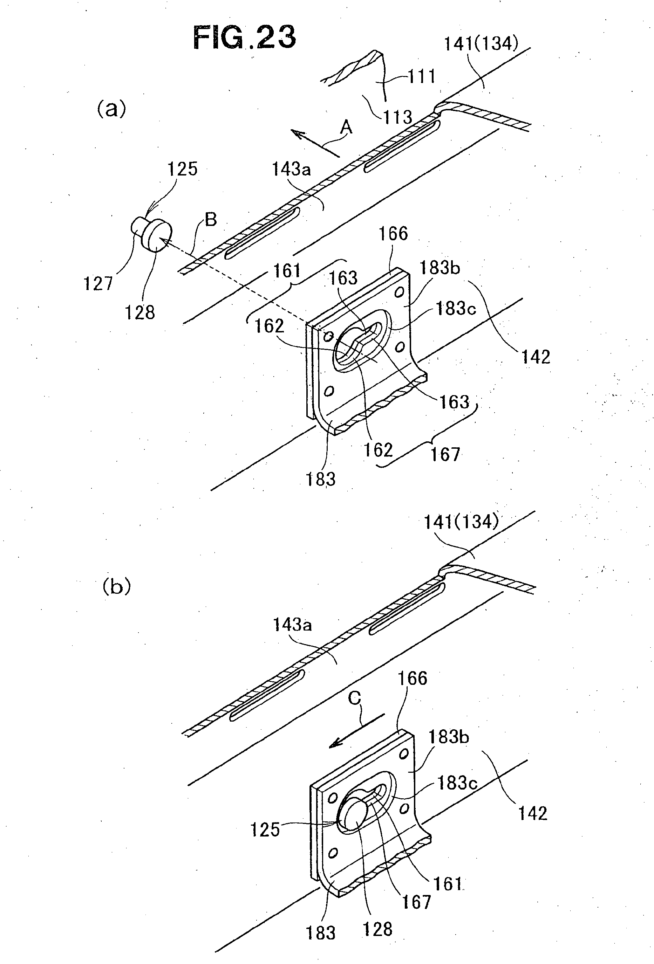

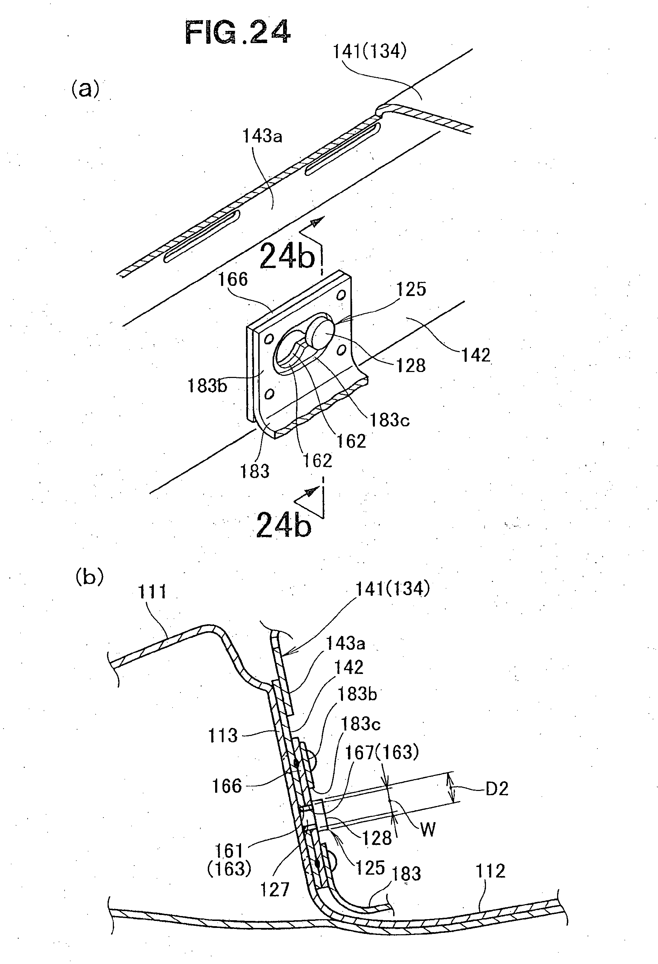

The procedure for mounting the garnish 134 on the inner wall 113 of the right front pillar 111 is next described with reference to FIGS. 23 and 24.

As shown in FIG. 23(a), the pillar sidewall 142 of the garnish 134 moves outward in the vehicle body lateral direction as indicated by the arrow A toward the inner wall 113 of the right front pillar 111. Accordingly, the first and second locking parts 161, 167 and the opening 183c fit, as indicated by the arrow B, onto the enlarged-diameter part 128 of the stud member 125 provided to the inner wall 113 of the right front pillar 111.

As shown in FIG. 23(b), the opening 183c and the fitting holes 162, 162 (see FIG. 23(a) of the first and second locking parts 161, 167 are fitted onto the enlarged-diameter part 128, and the enlarged-diameter part 128 of the stud member 125 protrudes from the fitting holes 162, 162. In this state, the garnish 134 (i.e., the pillar sidewall 142) moves in the forward direction of the vehicle body as indicated by the arrow C.

As shown in FIGS. 24(a) and (b), the opening 183c and the first and second locking parts 161, 167 move in the forward direction of the vehicle body, whereby the support shaft 127 of the stud member 125 is fitted into the locking grooves 163, 163 of the first and second locking parts 161, 167. The hole diameter D1 (FIG. 20) of the fitting hole 162 is formed to be about the same or about 0.1 mm larger than the outside diameter D2 of the enlarged-diameter part 128, and the width W of the locking groove 163 is formed to be less than the outside diameter D2 of the enlarged-diameter part 128.

Accordingly, the locking groove 163 can be prevented by the enlarged-diameter part 128 from dislodging from the support shaft 127 while the support shaft 127 is fitted into the locking groove 163. Thus, the garnish 134 (pillar sidewall 142) can be mounted onto the inner wall 113 of the right front pillar 111 via the support shaft 127 (i.e., the stud member 125).

As shown in FIGS. 23 and 24, the work for mounting the garnish 134 on the inner wall 113 of the right front pillar 111 can be carried out in a simple manner. In other words, the garnish 134 can be readily mounted on the right front pillar 111 in a simple operation in which the fitting holes 162, 162 of the first and second locking parts 161, 167 are fitted onto the enlarged-diameter part 128, and the locking grooves 163, 163 of the first and second locking parts 161, 167 are then fitted onto the support shaft 127.

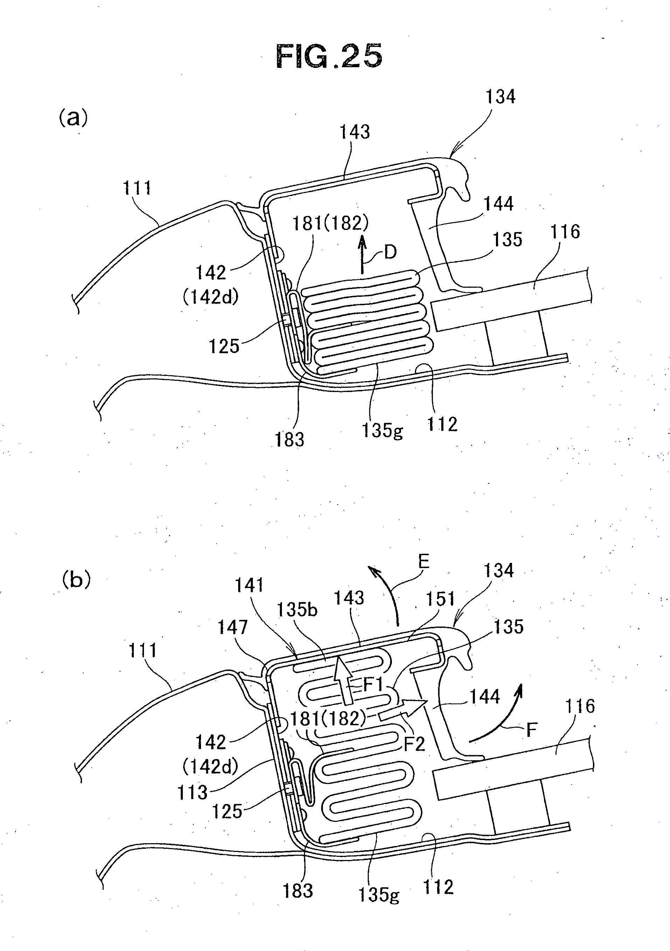

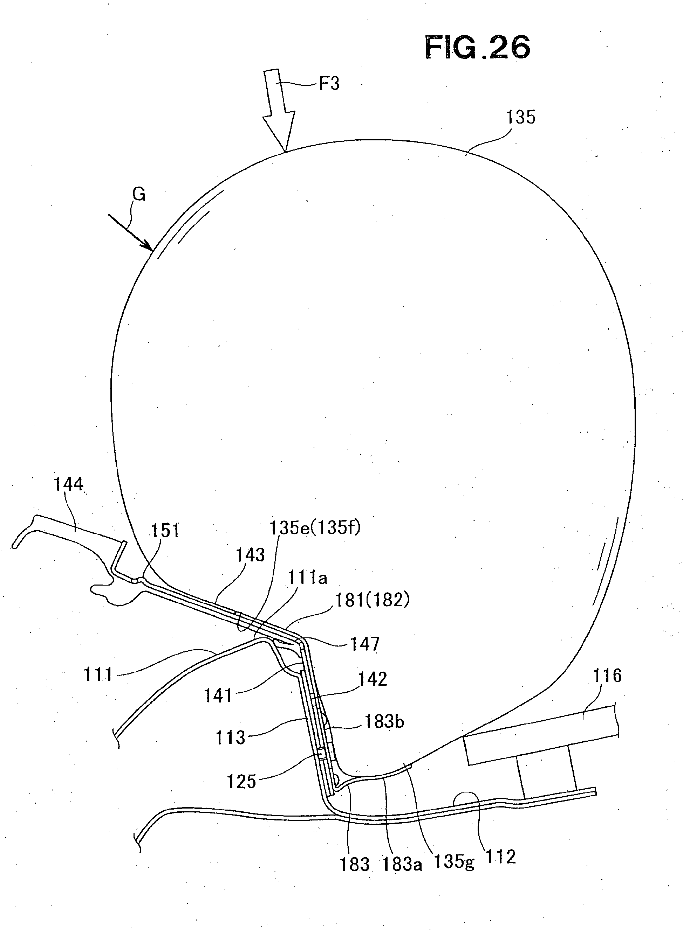

An example of airbag 135 deployment is next described with reference to FIGS. 25 to 27. In FIGS. 25 and 26, both the center strap 183 and the front and rear straps 181, 182 are shown in order to facilitate understanding of the deployment actuation of the airbag 135.

As shown in FIG. 25(a), the airbag 135 is folded in accordion fashion and disposed between the pillar sidewall 142 and the front windshield glass 116. The center lower location 135g of the airbag 135 is linked to the center part 142d of the pillar sidewall 142 using the center strap 183. Feeding gas from the inflator 137 (FIG. 15) to the airbag 135 in this state deploys the airbag 135 as indicated by the arrow D.

As shown in FIG. 25(b), the airbag 135 deploys inside the garnish 134, whereby upper part 135b of the airbag 135 abuts on the lid part 143 of the garnish 134. The upper part 135b abuts on the lid part 143 and the pressing force (i.e., deployment) force) F1 of the airbag 135 acts on the lid part 143 as indicated by the arrow.

The lid part 143 opens as indicated by the arrow E about the outer corner part 147 due to the deployment force F1 of the airbag 135 acting on the lid part 143. The deployment of the airbag 135 progresses, whereby the deployment force F2 of the airbag 135 acts on the window-glass-side wall 144 as indicated by the arrow.

The window-glass-side wall 144 opens about the inner corner part 151 as indicated by the arrow F due to the deployment force F2 of the airbag 135 acting on the window-glass-side wall 144. Thus, the garnish 134 is pressed upward and opened by the deployment force of the airbag 135.

The metal core bar 141 (pillar sidewall 142) is mounted on the inner wall 113 of the right front pillar 111 via the stud member 125. Thus, the garnish 134 can be held to the right front pillar 111 when the lid part 143 is opened by the deployment force F1 of the airbag 135 and furthermore when the window-glass-side wall 144 is opened by the deployment force F2 of the airbag 135.

The center lower location 135g of the airbag 135 is linked to the pillar sidewall 142 by the center strap 183. Accordingly, the center lower location 135g of the airbag 135 can be supported by the center strap 183 during deployment of the airbag (initial stage of deployment) 135. The center lower location 135g of the airbag 135 can be blocked by the center strap 183 from moving to the front windshield glass 116 side and the airbag 135 can be prevented from tipping over sideways.

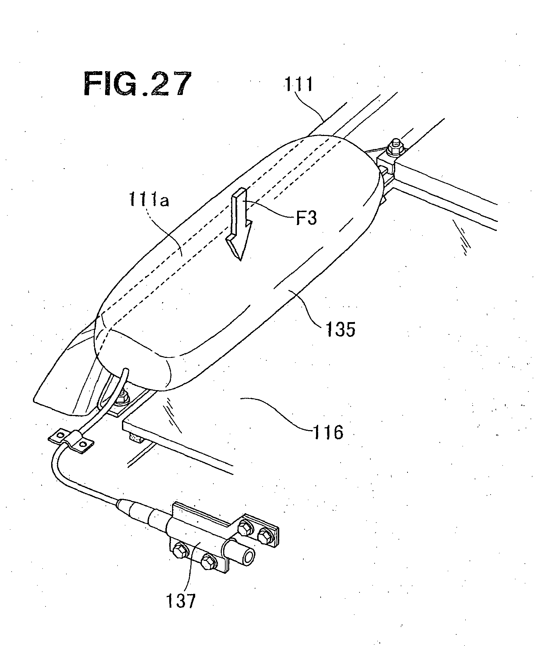

As shown in FIGS. 26 and 27, the garnish 134 (FIG. 25(b)) is pressed upward and opened by the deployment force of the airbag 135, whereby the airbag 135 opens between the right front pillar 111 and the front windshield glass 116.

The center lower location 135g of the airbag 135 is linked to the pillar sidewall 142 using the center strap 183 and is therefore prevented from tipping over sideways during deployment of the airbag 135. In other words, the deployment direction of the airbag 135 can be restricted by the center strap 183 when the airbag 135 deploys. Restricting the deployment direction of the airbag 135 using the center strap 183 and preventing the airbag 135 from tipping over sideways during deployment causes the airbag 135 to deploy along the upper part 111a of the right front pillar 111.

It is possible that the upper body (unprotected part) of an obstacle will come into contact as indicated by the arrow G and the airbag 135 will tip over sideways before the upper end part (protection-required part) of a rod-shaped obstacle collides when the airbag 135 has deployed along the upper part 111a of the right front pillar 111. In view of this possibility, the center lower location 135g is linked to the pillar sidewall 142 using the center strap 183, and the front end part 135e and rear end part 135f of the airbag 135 are linked to the stud member 125 using the front and rear straps 181, 182.

Accordingly, the airbag 135 can be prevented from tipping over by the center strap 183 and the front and rear straps 181, 182 when the upper body (unprotected part) of an obstacle has come into contact with the airbag 35 as indicated by the arrow G. Thus, the impact load F3 of the upper end part (where protection is required) of the obstacle can be reliably supported by the airbag 135, and an impact that acts on the upper end part (where protection is required) of the obstacle can be advantageously alleviated by the airbag 135.

### Fourth embodiment

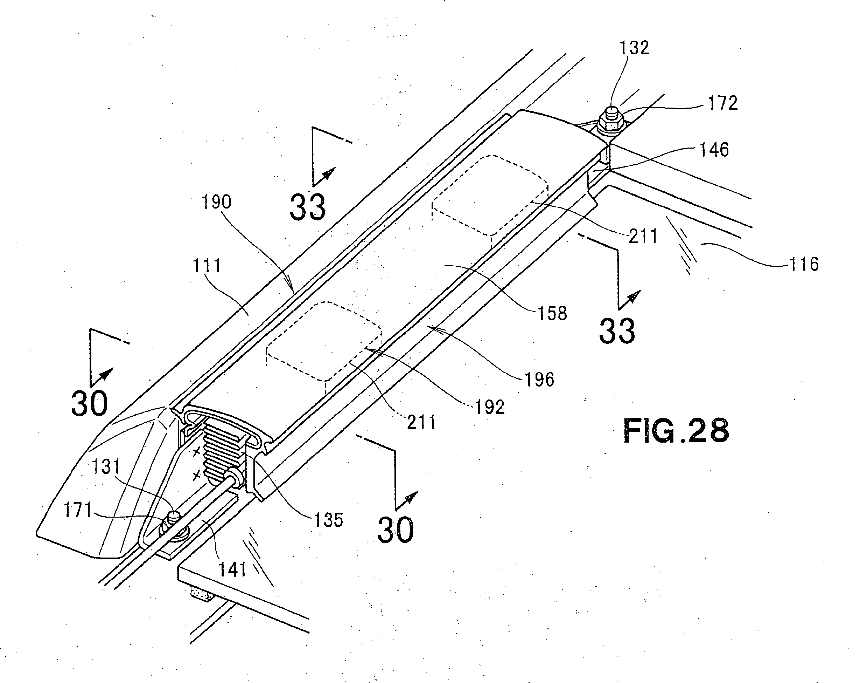

The airbag device 190 according to a fourth embodiment is next described with reference to FIGS. 28 to 33. The same reference numerals used for elements that are the same as or analogous to those of the airbag device 120 of the third embodiment. will be used in the airbag device 190 of the fourth embodiment, and a description will be omitted.

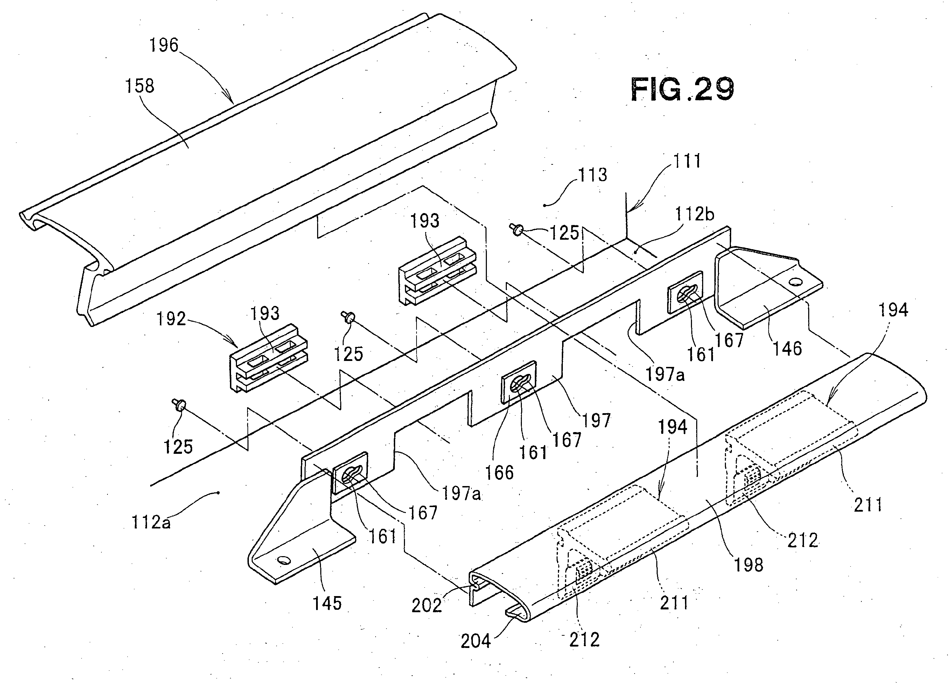

As seen in FIGS. 28 and 29, the airbag device 190 according to the fourth embodiment is provided with clip means 192 for holding a garnish 196 on the right front pillar 111, but the configuration is otherwise the same as the airbag device 120 according to the third embodiment.

The garnish 196 according to the fourth embodiment has a pillar sidewall 197 in lieu of the pillar sidewall 142 according to the third embodiment, and has a lid part 198 in lieu of the lid part 143 according to the third embodiment, but the configuration is otherwise the same as the garnish 134 according to the third embodiment.

The pillar sidewall 197 of the fourth embodiment has two opening recesses 197a, 197a formed in the pillar sidewall 142 of the third embodiment, but the configuration is otherwise the same as the pillar sidewall 142 according to the first embodiment. Each opening recess 197a is formed between a set of first and second locking parts 161, 167, and is an opening through which a female clip 193 can pass.

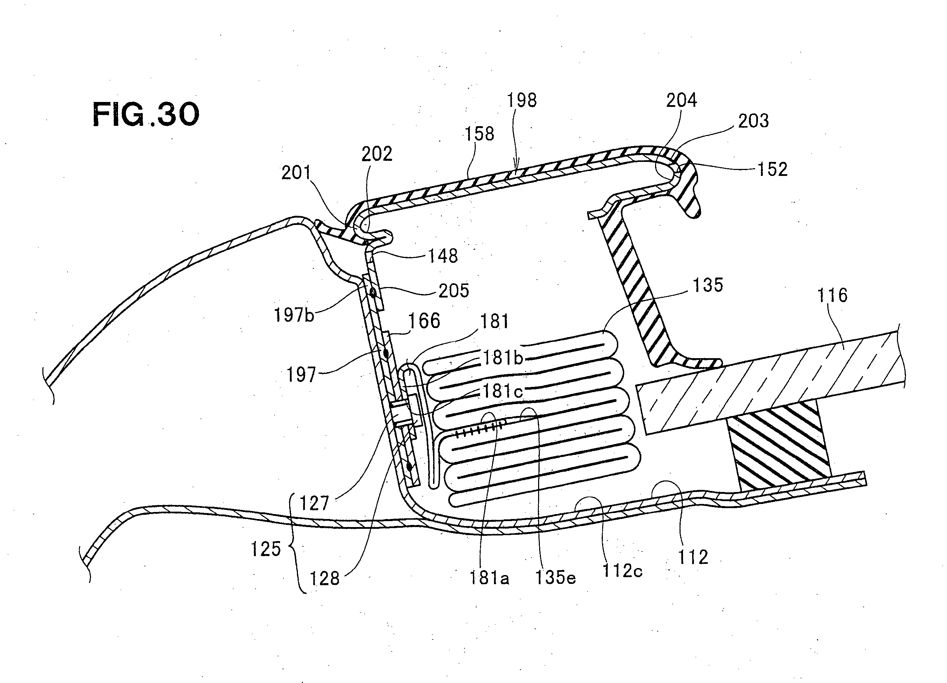

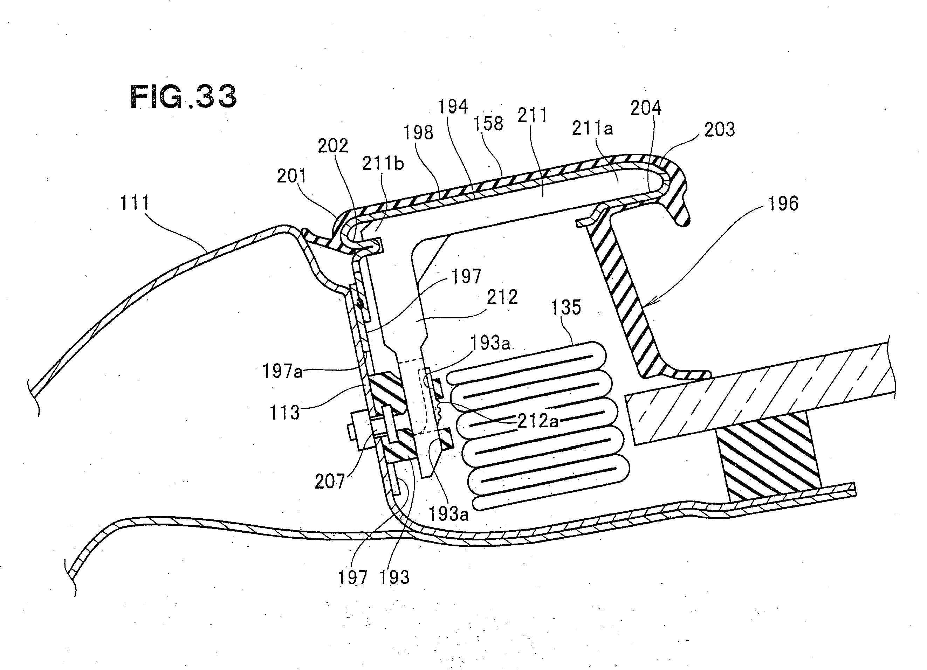

As shown in FIG. 30, the lid part 198 has an outer locking groove 202 and an inner locking groove 204 formed in the lid part 143 of the third embodiment, but the configuration is otherwise the same as the lid part 143 of the third embodiment. The outer locking groove 202 is formed inside a lid outer peripheral part 201. The inner locking groove 204 is formed inside a lid inner peripheral part 203. The outer locking groove 202 and the inner locking groove 204 are grooves for locking a male clip 194 (see FIG. 33).

The linking part 205 of the lid part 198 is integrally spot-welded or otherwise joined to an upper end part 197b of the pillar sidewall 197.

One end part 181a of the front strap 181 is sewn onto the front end part 135e of the airbag 135 in the same manner as the third embodiment, and the other end part 181b is locked onto the stud member 125 on the front side in the longitudinal direction of the vehicle body.

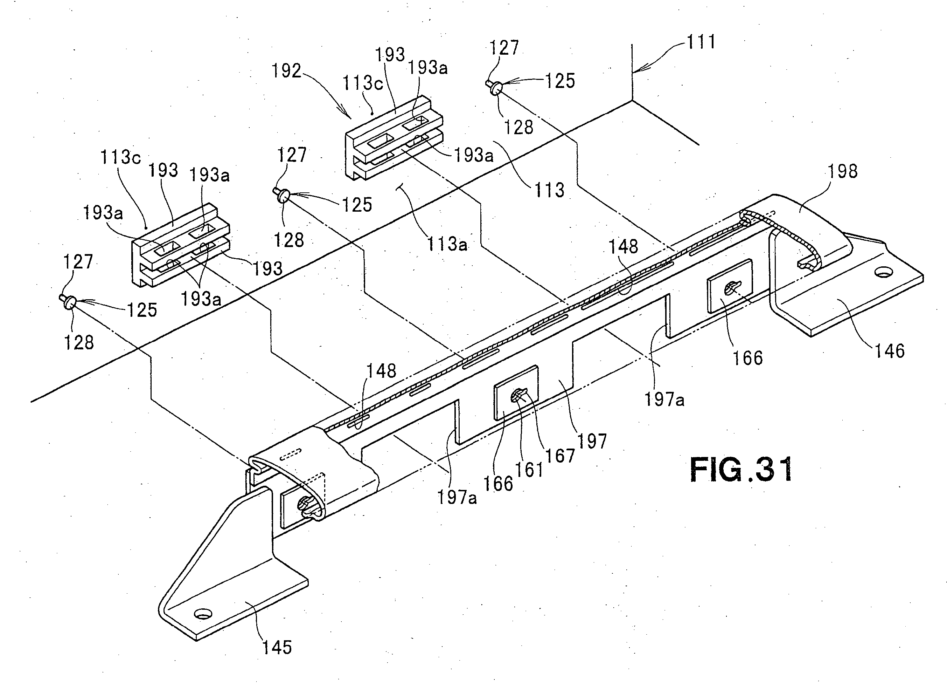

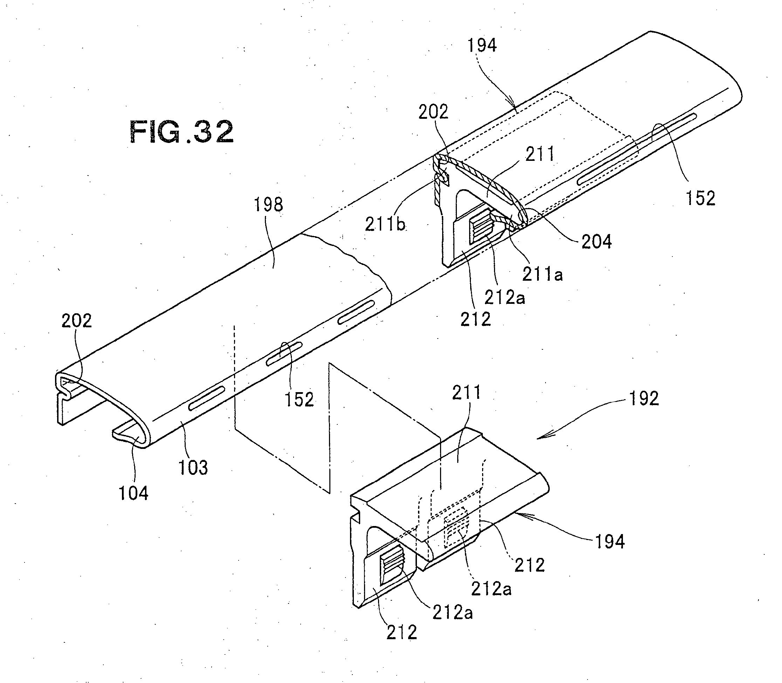

As shown in FIGS. 31 and 32, the clip means 192 includes a plurality of female clips 193 provided to the right front pillar 111, and a plurality of male clips 194 provided to the lid part 198.

The plurality of female clips 193 is provided to a location 113c between the plurality of stud members 125 in the outer surface 113a of the inner wall 113, and has a plurality of fitting holes 193a that pass though in the vertical direction. The fitting holes 193a are capable of locking the clip body 212 of the male clip 194. The female clips 193 are secured to the outer surface 113a of the inner wall 113 by stud bolts 207 (see FIG. 33).

In order to cause the female clips 193 to protrude to the airbag 135 side, the opening recess 197a through which the female clips 193 can be passed are formed in the pillar sidewall 197. Accordingly, as shown in FIG. 33, the female clips 193 are passed through the opening recess 197a and protrude into the interior (i.e., the airbag 135 side) of the garnish 196 while the garnish 196 is mounted on the right front pillar 111.

As shown in FIGS. 32 and 33, the male clips 194 have a base 211 mounted on the lid part 198, and a clip body 212 protruding downward from the base 211.

A base inner peripheral part 211a of the base 211 fits into the inner locking groove 204 of the lid part 198, and a base outer peripheral part 211b is locked onto the lid part 198 by being fitted into the outer locking groove 202 of the lid part 198.

The clip body 212 is a lock lug that can be inserted into the fitting holes 193a of the female clips 193, and has a locking piece 212a for preventing dislodgement from the fitting holes 193a. The locking piece 212a has a base end part that is deformably linked in an elastic manner to the lock lug of the clip body 212.

According to the clip means 192, the locking piece 212a abuts on the peripheral wall of the fitting hole 193a and elastically deforms when the clip body 212 is inserted into the fitting holes 193a of the female clips 193. Elastic deformation of the locking piece 212a allows insertion of the clip body 212. The insertion of the clip body 212 is continued in this state, whereby the locking piece 212a passes through the fitting holes 193a.

The locking piece 212a passes through the fitting holes 193a and the locking piece 212a is thereby restored to the state prior to elastic deformation. By having the locking piece 212a restored [to its former state], the locking piece 212a can be prevented from dislodging from the fitting holes 193a of the female clip 193. Thus, the clip body 212 is locked in a state fitted into the fitting holes 193a of the female clip 193.

The pillar sidewall 197 (see also FIG. 31) is made to elastically deform to the airbag 135 side and the lower end of the pillar sidewall 197 can be prevented from interfering with the stud members 125 (FIG. 31) when the clip body 212 is inserted into the fitting holes 193a of the female clip 193. The clip body 212 is fitted into the fitting holes 193a, and the pillar sidewall 197 in an elastically deformed state is thereafter restored [to its original state] to fit the first and second locking parts 161, 167 onto the stud members 125.

After the first and second locking parts 161, 167 have been fitted onto the stud members 125, the pillar sidewall 197 is moved toward the front of the vehicle body in the same manner as the third embodiment to lock the locking grooves 163, 163 (see FIG. 20) of the first and second locking parts 161, 167 onto the support shaft 127 of the stud members 125. The clip body 212 slidably moves to the front side of the vehicle body inside the fitting holes 193a when the pillar sidewall 197 moves toward the front of the vehicle body. Thus, the clip body 212 can be inserted into the fitting holes 193a of the female clips 193 and the stud members 125 can be locked onto the first and second locking parts 161, 167.

Carrying out this locking action in this manner with the clip body 212 fitted into the fitting holes 193a of the female clips 193 allows the pillar sidewall 197 to be held in a state of contact with the inner wall 113 of the right front pillar 111. Additionally, locking the clip body 212 in a fitted state in the fitting holes 193a allows the height of the garnish 196 to be adjusted to a desired height. Thus, the garnish 196 can be held with good precision in the mounting position of the right front pillar 111, and the external appearance can be advantageously ensured.

Furthermore, the clip body 212 of the male clips 194 is fitted into the fitting holes 193a of the female clips 193, whereby the garnish 196 is held with good precision. Thus, the garnish 196 can be positioned in a simple manner in the mounting position, and the work for assembling the garnish 196 can be facilitated.

When the pillar sidewall 197 is held in a state of contact to the right front pillar 111 (inner wall 113) using the clip means 192 in this manner, there is no need to hold the pillar sidewall 197 in a state of contact to the inner wall 113 using the stud members 125 (FIG. 30). Accordingly, as shown in FIG. 30, the enlarged-diameter part 128 of the stud members 125 can be disposed with clearance relative to the reinforcement plate 166. Ensuring clearance between the enlarged-diameter part 128 and the reinforcement plate 166 thus allows the enlarged-diameter part 128 to be readily locked to the other end part 181b (locking hole 181c) of the front strap 181.

When the airbag 135 shown in FIG. 33 deploys, it impossible, e.g., that the lid part 198 will dislodge from the base 211 of the male clips 194 under the deployment force of the airbag 135.

However, the lid part 198 is spot-welded to the pillar sidewall 197. The pillar sidewall 197 is linked to the inner wall 113 of the right front pillar 111 via the stud members 125 (FIG. 30). Furthermore, the front end part of the pillar sidewall 197 is fastened to the front location 112a of the flange part 112 via the front mounting bracket 145, and the rear end part of the pillar sidewall 197 is fastened to the rear location 112b of the flange part 112 via the rear mounting bracket 146. Accordingly, the lid part 198 shown in FIG. 33 can be held to the inner wall 113 of the right front pillar 111 via the pillar sidewall 197 even when the lid part 198 dislodges from the base 211 of the male clips 194.

In the airbag device 190 of the fourth embodiment, the same effects as those of the airbag device 120 of the third embodiment can be obtained.

In the third and fourth embodiments, an example was described in which a plurality of outer slits 148 is formed in the outer corner part 147 and a plurality of inner slits 152 is formed in the inner corner part 151, but no limitation is imposed thereby. It is also possible to use a configuration in which slits are not formed in the plurality of outer slits 148 and/or the plurality of inner slits 152. Also described was an example in which a plurality of outer slits 148 and a plurality of inner slits 152 are provided, but no limitation is imposed thereby. It is also possible to provide only one outer slit 148 and/or inner slit 152.

In the third and fourth embodiments, an example was described in which the other end part 183b of the center strap 183 is locked onto the reinforcement plate 166 and the pillar sidewall 142 using a plurality of rivets 185, but no limitation is imposed thereby. It is also possible to lock the other end part 183b of the center strap 183 to the stud members 125 to linked [the other end part 183b] to the inner wall 113 of the right front pillar 111.

In the third and fourth embodiments, examples were described in which the airbag devices 120, 190 are provided to the right front pillar 11, but no limitation is imposed thereby. It is also possible to provide the airbag devices 120, 190 to the left front pillar 111.

The shape and/or configuration of the airbag device 120, 190, the right front pillar 111, the flange part 112, the front windshield glass 116, the stud member 125, the garnishes 134, 196, the airbag 135, the inflator 137, the core bar 141, the pillar sidewalls 142, 197, the lid parts 143, 198, the window-glass-side wall 144, the front mounting bracket 145, the rear mounting bracket 146, the outer corner part 147, the outer slits 148, the decorative resin part 158, the first locking part 161, the fitting hole 162, the locking groove 163, the center strap 183, the clip means 192, the female clips 193, the male clips 194, and the like are not limited to those exemplified in the embodiments, and may be suitably modified.

### INDUSTRIAL APPLICABILITY

The present invention is advantageously applied to an automobile provided with an airbag device covered with a garnish and in which an airbag is accommodated between the front pillar and the front windshield glass.

### REFERENCE SIGNS LIST

20, 90: Airbag device
11: Right front pillar (front pillar)
12: Flange part (vehicle body)
12a: Front location (location on the front end part of the vehicle body, between the front pillar and the front windshield glass)
12b: Rear location (location on the rear end part of the vehicle body, between the front pillar and the front windshield glass)
16: Front windshield glass
25: Stud member
27: Support shaft
28: Enlarged-diameter part
31: Front stud bolt
32: Rear stud bolt
34: Garnish
35: Airbag
35d: Lower part of the airbag
35g: Center lower location of the airbag
37: Inflator
41: Core bar
41a: Surface of the core bar
42: Pillar sidewall
42a: Front end part of the pillar sidewall (front end part of the core bar)
42b: Rear end part of the pillar sidewall (rear end part of the core bar)
42c: Inner walls surface of the pillar sidewall
42c: Outer wall surface of the pillar sidewall
43: Lid part
44: Window-glass-side wall
45: Front mounting bracket
46: Rear mounting bracket
47: Outer corner part (corner part)
48: Outer slit (slit)
58: Decorative resin part
61: First locking part (locking part)
62: Fitting hole
63: Locking groove
71: Front nut
72: Rear nut
83: Center strap (connector)
83b: Other end part of the center strap (mounting end part)
92: Recess
95: Metal plate
97: Rivets (fastening member)
D2: Outside diameter of the enlarged-diameter part
H1, H2, H3: Distances between outer slits
W: Width

## Claims

1. An airbag device comprising:
an airbag (35) accommodated in a folded state between a front pillar (11) and a front windshield glass (16);
an inflator (37) for feeding gas to the airbag to thereby deploy the airbag; and
a garnish (34) covering the airbag and being capable of opening by a deployment force of the airbag,
wherein the garnish (34) comprises: a metal core bar (41) adapted to be mounted on the front pillar and extending from the front pillar to above the front windshield glass; and a window-glass-side wall (44) made of resin and extending from an end part of the core bar positioned above the front windshield glass to a surface of the front windshield glass,
the core bar (41) comprises: a pillar sidewall (42) extending in a longitudinal direction of the vehicle body along the front pillar; and a lid part (43) extending from an upper end part of the pillar sidewall toward a center of the vehicle body to above the front windshield glass to cover the airbag, and
the pillar sidewall (42) and the lid part (43) are integrally joined together,
wherein the lid part (43) has a corner part (47) in a location linked to the pillar sidewall, and the lid part is supported pivotably about the corner part, and has a plurality of slits (48, 52) formed in the corner part (47) in the longitudinal direction of the vehicle body so as to make the corner part adjustable in strength, and
a distance (H1, H2, H3) between adjacent ones of the plural slits (48, 52) increases from locations set apart from the inflator toward a vicinity of the inflator.

2. The airbag device of claim 1, wherein the airbag device comprises:
a stud member (25) having a support shaft (27) protruding from the front pillar (11) toward the airbag (35), and an enlarged-diameter part (28) formed on an end part of the support shaft; and
a locking part (61) formed in the pillar sidewall for mounting the pillar sidewall onto the stud member,
the locking part (61) comprises:
a fitting hole (62) in which the enlarged-diameter part (28) is engageable, and
a locking groove (63) into which the support shaft (27) is fitted, the locking groove (63) communicating with the fitting hole (62) and the locking groove being less wide than an outside diameter of the enlarged-diameter part (28).

3. The airbag device of claim 1, wherein the core bar (41) comprises a front mounting bracket (45) provided to a front end part thereof and a rear mounting bracket (46) provided to a rear end part thereof;
the front mounting bracket (45) is fastened by a front nut (71) to a front stud bolt (31) protruding from a location on a front end part of the vehicle body, between the front pillar and the front windshield glass, and
the rear mounting bracket (46) is fastened by a rear nut (72) to a rear stud bolt (32) protruding from a location on a rear end part of the vehicle body, between the front pillar and the front windshield glass.

## Patentansprüche

1. Airbagvorrichtung, welche aufweist:
einen Airbag (35), der im gefalteten Zustand zwischen einer Frontsäule (11) und einer vorderen Windschutzscheibe (16) aufgenommen ist;
einen Inflator (37) zum Fördern von Gas zu dem Airbag, um hierdurch den Airbag zu entfalten; und
eine Verkleidung (34), die den Airbag abdeckt und durch eine Entfaltungskraft des Airbags öffenbar ist,
wobei die Verkleidung (34) aufweist:
eine Metallkernstange (41), die an der Frontsäule anbringbar ist und sich von der Frontsäule bis über die vordere Windschutzscheibe erstreckt; und eine Fensterscheiben-seitige Wand (44), die aus Kunststoff hergestellt ist und sich von einem über der vorderen Windschutzscheibe angeordneten Endteil der Kernstange zu einer Oberfläche der vorderen Windschutzscheibe hin erstreckt,
wobei die Kernstange (41) aufweist: eine Säulenseitenwand (42), die sich in Längsrichtung der Fahrzeugkarosserie entlang der Frontsäule erstreckt; und ein Abdeckteil (43), das sich von einem oberen Endteil der Säulenseitenwand zur Mitte der Fahrzeugkarosserie hin über die vordere Windschutzscheibe erstreckt, um den Airbag abzudecken, und die Säulenseitenwand (42) und das Abdeckteil (43) integral miteinander verbunden sind,
wobei das Abdeckteil (43) ein Eckteil (47) an einer Stelle aufweist, die mit der Säulenseitenwand gekoppelt ist, und das Abdeckteil um das Eckteil herum schwenkbar gelagert ist, und eine Mehrzahl von Schlitzen (48, 52) aufweist, die in dem Eckteil (47) in der Längsrichtung der Fahrzeugkarosserie ausgebildet sind, um die Festigkeit des Eckteils einstellbar zu machen, und
ein Abstand (H1, H2, H3) zwischen benachbarten der mehreren Schlitze (48, 52) von vom Inflator entfernten Stellen zur Nachbarschaft des Inflators hin zunimmt.

2. Die Airbagvorrichtung von Anspruch 1, wobei die Airbagvorrichtung aufweist:
ein Zapfelenelement (25) mit einem Lagerschaft (27), der von der Frontsäule (11) zum Airbag (35) hin vorsteht, und einem im Durchmesser erweiterten Teil (28), das an einem Endteil des Lagerschafts ausgebildet ist; und
ein Arretierteil (61), das in der Säulenseitenwand ausgebildet ist, um die Säulenseitenwand auf dem Zapfenelement anzubringen,
wobei das Arretierteil (61) aufweist:
ein Einsetzloch (62), mit dem das im großen Durchmesser erweiterte Teil (28) in Eingriff bringbar ist; und
eine Arretiernut (63), in die der Lagerschaft (27) eingesetzt ist, wobei die Arretiernut (63) mit dem Einsetzloch (62) in Verbindung steht und die Arretiernut weniger breit ist als ein Außendurchmesser des im Durchmesser erweiterten Teils (28).

3. Die Airbagvorrichtung von Anspruch 1, wobei die Kernstange (41) einen vorderen Befestigungsbeschlag (45), der an ihrem vorderen Endteil vorgesehen ist, und einen hinteren Befestigungsbeschlag (46), der an ihrem hinteren Endteil vorgesehen ist, aufweist;
wobei der vordere Befestigungsbeschlag (45) durch eine vordere Mutter (71) an eine vorderen Stehbolzen (31) befestigt ist, der von einer Stelle an einem vorderen Endteil der Fahrzeugkarosserie zwischen der Frontsäule und der vorderen Windschutzscheibe vorsteht, und
der hintere Befestigungsbeschlag (46) durch eine hintere Mutter (72) an einem hinteren Stehbolzen (32) befestigt ist, der von einer Stelle am hinteren Endteil der Fahrzeugkarosserie zwischen der Frontsäule und der vorderen Windschutzscheibe vorsteht.

## Revendications

1. Dispositif de coussin gonflable comprenant :
un coussin gonflable (35) logé dans un état plié entre un montant avant (11) et un verre de pare-brise avant (16) ;
un gonfleur (37) pour alimenter le coussin gonflable en gaz afin de déployer ainsi le coussin gonflable ; et
une garniture (34) recouvrant le coussin gonflable et capable de s'ouvrir grâce à une force de déploiement du coussin gonflable,
dans lequel la garniture (34) comprend : une armature métallique (41) adaptée pour être montée sur le montant avant et s'étendant depuis le montant avant jusqu'au-dessus du verre de pare-brise avant ; et une paroi latérale de verre à vitre (44) réalisée en résine et s'étendant depuis une partie d'extrémité de l'armature positionnée au-dessus du verre de pare-brise avant jusqu'à une surface du verre de pare-brise avant,
l'armature (41) comprend : une paroi latérale de montant (42) s'étendant dans une direction longitudinale de la carrosserie de véhicule le long du montant avant ; et une partie de couvercle (43) s'étendant depuis une partie d'extrémité supérieure de la paroi latérale de montant vers un centre de la carrosserie du véhicule jusqu'au-dessus du verre de pare-brise avant pour recouvrir le coussin gonflable, et
la paroi latérale de montant (42) et la partie de couvercle (43) sont assemblées d'un seul tenant,
dans lequel la partie de couvercle (43) comporte une partie de coin (47) dans un emplacement relié à la paroi latérale de montant, et la partie de couvercle est supportée en pivotement autour de la partie de coin, et comporte une pluralité de fentes (48, 52) formées dans la partie de coin (47) dans la direction longitudinale de la carrosserie de véhicule de façon à rendre la partie de coin réglable en résistance, et
une distance (H1, H2, H3) entre des fentes adjacentes de la pluralité de fentes (48, 52) augmente depuis des emplacements espacés du gonfleur vers une proximité du gonfleur.

2. Dispositif de coussin gonflable selon la revendication 1, dans lequel le dispositif de coussin gonflable comprend :
un organe de goujon (25) comportant un arbre-support (27) dépassant du montant avant (11) vers le coussin gonflable (35), et une partie à diamètre agrandi (28) formée sur une partie d'extrémité de l'arbre-support ; et
une partie de blocage (61) formée dans la paroi latérale de montant permettant de monter la paroi latérale de montant sur l'organe de goujon,
la partie de blocage (61) comprend :
un trou d'ajustement (62) dans lequel la partie à diamètre agrandi (28) peut être enclenchée, et
une rainure de blocage (63) dans laquelle l'arbre-support (27) est ajusté, la rainure de blocage (63) communiquant avec le trou d'ajustement (62) et la rainure de blocage étant moins large qu'un diamètre extérieur de la partie à diamètre agrandi (28).

3. Dispositif de coussin gonflable selon la revendication 1, dans lequel l'armature (41) comprend un support de montage avant (45) prévu sur une partie d'extrémité avant de celle-ci et un support de montage arrière (46) prévu sur une partie d'extrémité arrière de celle-ci ;
le support de montage avant (45) est fixé par un écrou avant (71) à un goujon avant (31) dépassant d'un emplacement sur une partie d'extrémité avant de la carrosserie de véhicule, entre le montant avant et le verre de pare-brise avant, et
le support de montage arrière (46) est fixé par un écrou arrière (72) à un goujon arrière (32) dépassant d'un emplacement sur une partie d'extrémité arrière de la carrosserie de véhicule, entre le montant avant et le verre de pare-brise avant.
